# EUROPEAN PATENT APPLICATION

(11) **EP 4 641 982 A1**
(43) Date of publication of application: **29.10.2025**
(21) Application number: 24793102.5
(22) Date of filing: 20.02.2024
(51) Int. Cl.: H04L 12/28, A47L 9/28, G01S 13/04

(54) **ROBOT CLEANER AND METHOD FOR CONTROLLING ROBOT CLEANER**

(30) Priority: 17.04.2023 KR 20230050340; 14.07.2023 KR 20230092015
(71) Applicant: Samsung Electronics Co., Ltd., Suwon-si, Gyeonggi-do 16677 (KR)
(72) Inventor: SEO, Kangjun, Suwon-si, Gyeonggi-do 16677 (KR); PARK, Hyelim, Suwon-si, Gyeonggi-do 16677 (KR); SUNG, Soohyun, Suwon-si, Gyeonggi-do 16677 (KR); SON, Jonghyun, Suwon-si, Gyeonggi-do 16677 (KR); SHIN, Kyoungha, Suwon-si, Gyeonggi-do 16677 (KR); JANG, Myoungsoo, Suwon-si, Gyeonggi-do 16677 (KR); CHO, Chihong, Suwon-si, Gyeonggi-do 16677 (KR)
(74) Representative: Gulde & Partner
(86) International application number: PCT/KR2024/095420
(87) International publication number: WO 2024/219918

(57) **Abstract**

A robot cleaner according to an embodiment comprises: a driving device which moves the robot cleaner; a cleaning device; and a control unit which controls the driving device to move the robot cleaner into a cleaning area, performs control to close a door in the cleaning area on the basis that no entity is detected in the cleaning area, and controls the driving device and the cleaning device to clean the cleaning area while the door is closed.

## Description

### [Technical Field]

The disclosure relates to a robot cleaner capable of opening or closing doors.

### [Background Art]

Robots have been developed for industrial use and have taken part of factory automation. With further expansion of robot application areas these days, medical robots, aerospace robots, service robots, or the like, have been developed and even home robots that may be used at homes have also been developed. Among these robots, a robot that is able to travel by itself is called a mobile robot.

A prime example of the mobile robot is a robot cleaner for cleaning indoor space. The mobile robot may identify objects located in the indoor space and create a map of the indoor space while traveling in the indoor space. The mobile robot may use the map of the indoor space to clean the indoor space. The mobile robot may also collect environmental data of the indoor space.

The robot cleaner is able to clean the indoor space without the intervention of the user, but when there is a door, the robot cleaner is unable to smoothly do the cleaning because the robot cleaner recognizes the door as an obstacle. Furthermore, noise generated while the robot cleaner is cleaning the indoor space may cause discomfort to the user.

### [DISCLOSURE]

### [Technical Problem]

An aspect of the disclosure is to provide a robot cleaner capable of opening or closing doors and a method for controlling the robot cleaner.

Another aspect of the disclosure is to provide a robot cleaner capable of minimizing noise delivered to the user and a method for controlling the robot cleaner.

Another aspect of the disclosure is to provide a server device capable of opening or closing doors and a method for controlling the server device.

Another aspect of the disclosure is to provide a server device capable of minimizing noise delivered to the user from the robot cleaner by opening or closing the door and a method for controlling the server device.

### [Technical Solution]

According to an embodiment of the disclosure, a robot cleaner includes a driving device, a cleaning device and a controller, wherein the controller controls the driving device to move the robot cleaner into a cleaning area, performs control to open or close a door of the cleaning area based on whether an entity is detected in the cleaning area, and controls the driving device and the cleaning device to perform cleaning of the cleaning area.

According to an embodiment of the disclosure, a method for controlling a robot cleaner includes controlling a driving device of the robot cleaner to move the robot cleaner into the cleaning area; controlling a door of the cleaning area to be opened or closed based on whether an entity is detected in the cleaning area, and controlling the driving device and a cleaning device of the robot cleaner to clean the cleaning area.

According to an embodiment of the disclosure, a robot cleaner includes a driving device configured to move the robot cleaner; a cleaning device; a communicator; and a controller configured to receive location information of at least one entity on a cleaning map from an external device through the communicator, set cleaning sequences of a plurality of cleaning areas of the cleaning map based on the location information of the at least one entity, and control the driving device and the cleaning device to perform cleaning of the plurality of cleaning areas based on the set cleaning sequences.

According to an embodiment of the disclosure, a method for controlling a robot cleaner includes receiving location information of at least one entity on a cleaning map from an external device through a communicator; setting cleaning sequences of a plurality of cleaning areas of the cleaning map based on the location information of the at least one entity; and controlling the robot cleaner to clean the plurality of cleaning areas based on the set cleaning sequences.

According to an embodiment of the disclosure, a server device includes a communicator; and a controller configured to receive location information of a robot cleaner from an external device (e.g., the robot cleaner or a home sensor) through the communicator, and based on the robot cleaner entering a cleaning area having no entity therein, transmit a door closing command to a door opening/closing device capable of opening or closing a door of the cleaning area through the communicator.

According to an embodiment of the disclosure, a method for controlling a server device includes receiving location information of a robot cleaner from an external device (e.g., the robot cleaner or a home sensor) through a communicator; and based on the robot cleaner entering a cleaning area having no entity therein, transmitting a door closing command to a door opening/closing device capable of opening or closing a door of the cleaning area through the communicator.

### [DESCRIPTION OF DRAWINGS]

FIG. 1 illustrates a network system including a cleaner according to an embodiment of the disclosure;
FIG. 2 illustrates an exterior of a robot cleaner according to an embodiment of the disclosure;
FIG. 3 illustrates a side of a robot cleaner shown in FIG. 2 according to an embodiment of the disclosure;
FIG. 4 illustrates an exterior of a robot cleaner according to an embodiment of the disclosure;
FIG. 5 illustrates a control block diagram of a robot cleaner according to an embodiment of the disclosure;
FIG. 6 is a flowchart illustrating a procedure in which a robot cleaner creates a cleaning map according to an embodiment of the disclosure;
FIG. 7 illustrates a cleaning map according to an embodiment of the disclosure;
FIG. 8 illustrates an interface for applying a door opening/closing device to a cleaning map according to an embodiment of the disclosure;
FIG. 9 illustrates an interface for setting cleaning sequences with respect to a cleaning map according to an embodiment of the disclosure;
FIG. 10 is a control block diagram of a server device according to an embodiment of the disclosure;
FIG. 11 is a flowchart illustrating operations performed by a server device according to an embodiment of the disclosure;
FIG. 12 is a control block diagram of a door opening/closing device according to an embodiment of the disclosure;
FIG. 13 illustrates an exterior of a door opening/closing device according to an embodiment of the disclosure;
FIGS. 14, 15, 16, 17, and 18 are diagrams illustrating a method for operating a door opening/closing device according to various embodiments of the disclosure;
FIG. 19 is a flowchart illustrating operations of a robot cleaner according to an embodiment of the disclosure;
FIG. 20 illustrates a robot cleaner moving out of a moving range of a door to close a door of a room having no entity therein according to an embodiment of the disclosure;
FIG. 21 is a flowchart illustrating operations when a robot cleaner enters a room having an entity therein according to an embodiment of the disclosure;
FIGS. 22A and 22B are flowcharts illustrating operations when a robot cleaner enters a room having an entity therein according to various embodiments of the disclosure;
FIG. 23 illustrates a robot cleaner outputs sensory information for inquiring whether to allow cleaning according to an embodiment of the disclosure;
FIG. 24 illustrates a robot cleaner outputs sensory information for inquiring a cleaning condition according to an embodiment of the disclosure;
FIG. 25 is a flowchart illustrating operations of a robot cleaner which is cleaning a common room according to an embodiment of the disclosure;
FIG. 26 illustrates all doors included in a common room closed according to an embodiment of the disclosure;
FIG. 27 is a flowchart illustrating operations when a robot cleaner cleans a common room according to an embodiment of the disclosure;
FIG. 28 illustrates only a door that satisfies a predetermined condition closed among a plurality of doors included in a common room according to an embodiment of the disclosure;
FIG. 29 is a flowchart illustrating a robot cleaner sets cleaning sequences based on location information of an entity according to an embodiment of the disclosure;
FIG. 30 illustrates cleaning sequences being set according to an embodiment of the disclosure;
FIG. 31 illustrates cleaning sequences being set according to an embodiment of the disclosure;
FIG. 32 is a flowchart illustrating operations after a robot cleaner enters a room having an entity therein according to an embodiment of the disclosure;
FIG. 33 illustrates an interface for setting inhibition of operation of a door opening/closing device according to an embodiment of the disclosure; and
FIG. 34 is a diagram illustrating a direction of a noise canceling sound output by a robot cleaner according to an embodiment of the disclosure.

### [MODES OF THE INVENTION]

Embodiments and features as described and illustrated in the disclosure are merely examples, and there may be various modifications replacing the embodiments and drawings at the time of filing this application.

The terminology used herein is for the purpose of describing particular embodiments only and is not intended to limit the disclosure.

It is to be understood that the singular forms "a", "an," and "the" include plural referents unless the context clearly indicates otherwise.

Throughout the specification, "A or B", "at least one of A and B", "at least one of A or B", "A, B or C", "at least one of A, B and C", and "at least one of A, B, or C" may each include any one or all the possible combinations of A, B and C. For example, the "at least one of A or B" may include "A", "B", or "A and B". The "at least one of A and B" may include "A", "B", or "A and B". In another example, the "at least one of A, B or C" may include "A", "B", C", "A and B", "B and C", "A and C" or "A, B and C". The "at least one of A, B and C" may include "A", "B", C", "A and B", "B and C", "A and C" or "A, B and C".

Throughout the specification, the expression "and/or" may be interpreted to include a combination or any of associated elements. For example, an expression "A, B and/or C" may include "A", "B", C", "A and B", "B and C", "A and C" or "A, B and C".

Terms like "first", "second", or the like, may be simply used to distinguish an element from another, without limiting the elements in a certain sense (e.g., in terms of importance or order).

When an element is mentioned as being "coupled" or "connected" to another element with or without an adverb "functionally" or "operatively", it means that the element may be connected to the other element directly (e.g., wiredly), wirelessly, or through a third element.

It will be further understood that the terms "comprise" and/or "comprising," when used in this specification, specify the presence of stated features, integers, steps, operations, elements, parts or combinations thereof, but do not preclude the possible presence or addition of one or more other features, integers, steps, operations, elements, components, and/or groups thereof.

When an element is mentioned as being "connected to", "coupled to", "supported on" or "contacting" another element, it includes not only a case that the elements are directly connected to, coupled to, supported on or contact each other but also a case that the elements are connected to, coupled to, supported on or contact each other through a third element.

Throughout the specification, when an element is mentioned as being located "on" another element, it implies not only that the element is abut on the other element but also that a third element exists between the two elements.

Furthermore, the terms, such as "~ part", "~ block", "~ member", "~ module", or the like, may refer to a unit of handling at least one function or operation. For example, the terms may refer to at least one process handled by hardware, such as a field-programmable gate array (FPGA)/application specific integrated circuit (ASIC), or the like, software stored in memory, or at least one processor.

Reference numerals used for method steps are just used to identify the respective steps, but not to limit an order of the steps. Thus, unless the context clearly dictates otherwise, the written order may also be practiced otherwise.

Reference will now be made in detail to embodiments of the disclosure, which are illustrated in the accompanying drawings.

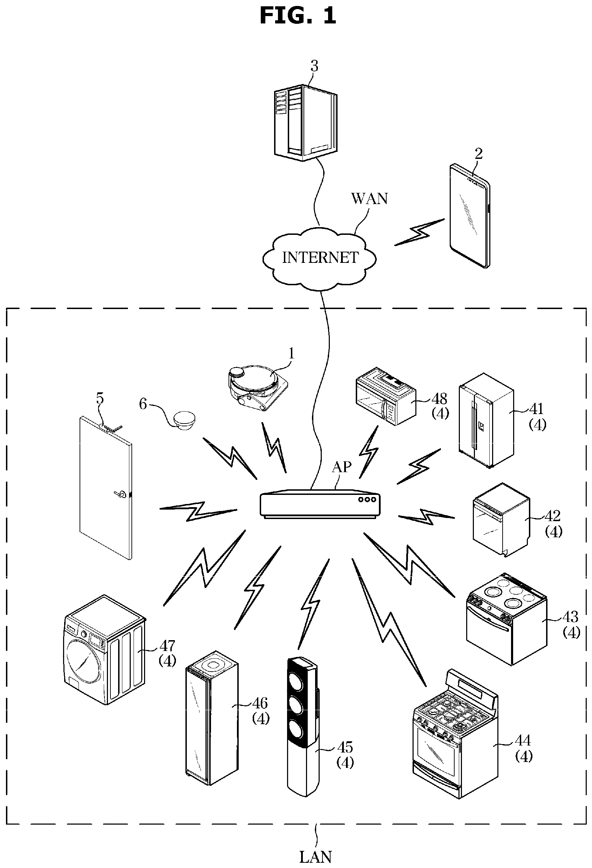

FIG. 1 illustrates a network system including a cleaner according to an embodiment of the disclosure.

Referring to FIG. 1, the network system in the embodiment of the disclosure may include a robot cleaner 1, a user device 2, a server device 3 (hereinafter, referred to as a server), home appliances 4, a door opening/closing device 5 and/or a home sensor 6.

The door opening/closing device 5 may refer to a device for opening or closing a door. For this, the door opening/closing device 5 may include an actuator for opening or closing the door.

In various embodiments of the disclosure, the network system may further include a window opening/closing device (not shown) to open or close a window in addition to the door opening/closing device. A description of the door opening/closing device 5 will be equally applied to the window opening/closing device.

The home sensor 6 may include various sensors capable of collecting information regarding an indoor space. For example, the home sensor 6 may include at least one camera capable of capturing an image of spaces corresponding to a cleaning map, a CCTV, at least one wireless communication anchor capable of communicating with a wireless communication tag based on a wireless signal (an ultra wide band signal (UWB) signal), and/or at least one radar sensor, ultrasound sensor and/or a lidar sensor that may scan the spaces corresponding to the cleaning map.

The robot cleaner 1 may include a communication module for communicating with the user device 2, the server 3, the home appliances 4, the door opening/closing device 5 and/or the home sensor 6, a user interface for receiving user inputs or outputting information, at least one processor for controlling operation of the robot cleaner 1, and at least one memory for storing a program for controlling the operation of the robot cleaner 1.

The home appliances 4 may include various types of electronic products. For example, the home appliances 4 may include at least one of a refrigerator 41, a dish washer 42, an electric range 43, an electric oven 44, a garment care device 46, a clothing treatment device (e.g., a washing machine or a dryer) 47, or a microwave oven 48. The aforementioned home appliances are merely examples, and other various types of electronic products such as televisions in addition to the aforementioned home appliance products may also be included in the home appliances 4.

The door opening/closing device 5 may also be an example of the home appliances 4, but for convenience of explanation, the door opening/closing device 5 will be described separately from the home appliances 4 in the disclosure. It is obvious that descriptions of the home appliances 4 are equally applied to the door opening/closing device 5.

The server 3 may include a communication module for communicating with the robot cleaner 1, another server, the user device 2, the home appliances 4, the door opening/closing device 5 and/or the home sensor 6. The server 3 may include at least one processor for processing data received from the robot cleaner 1, the other server, the user device 2, the home appliances 4, the door opening/closing device 5 and/or the home sensor 6, and at least one memory for storing a program for processing data or the processed data. The server 3 may be implemented with various computing devices such as a workstation, a cloud, a data drive, a data station, or the like. The server 3 may be implemented with one or more servers physically or logically classified based on function, sub-configuration of the function or data, and may transmit or receive data through inter-server communication and process the data.

The server 3 may store and/or manage a user account, register the robot cleaner 1, the user device 2, the home appliances 4, the door opening/closing device 5 and/or the home sensor 6 by associating them with the user account, and perform a function of managing or controlling the registered robot cleaner 1, the user device 2, the home appliances 4, the door opening/closing device 5 and/or the home sensor 6. For example, the user may access the server 3 through the user device 2 to create a user account. The user account may be identified by an identity (ID) and a password created by the user. The user may access the server 3 through the user device 2 to manage the user account. The server 3 may register the robot cleaner 1, the home appliances 4, the door opening/closing device 5 and/or the home sensor 6 with the user account, according to a set procedure. For example, the server 3 may connect identification information (e.g., a serial number, a media access control (MAC) address, or the like) of the robot cleaner 1 to the user account to register, manage and control the robot cleaner 1. Similarly, the server 3 may register and control the user device 2, the home appliances 4, the door opening/closing device 5 and/or the home sensor 6 with the user account.

The server 3 may receive various information from the robot cleaner 1, the user device 2, the home appliances 4, the door opening/closing device 5 and/or the home sensor 6 registered with the user account.

In various embodiments of the disclosure, the server 3 may be provided in the plural.

For example, the server 3 may include a first server and a second server. The first server may create and/or manage user account information, and register and/or manage information about the robot cleaner 1, the home appliances 4, the door opening/closing device 5 and/or the home sensor 6 with the user account information. The second server may receive the registered information of the robot cleaner 1, the home appliances 4, the door opening/closing device 5 and/or the home sensor 6 from the first server to control the robot cleaner 1, the home appliances 4, the door opening/closing device 5 and/or the home sensor 6.

In another example, the second server may perform a function of managing the robot cleaner 1, the home appliances 4, the door opening/closing device 5 and/or the home sensor 6 registered in the first server on behalf of the first server.

The number of the servers 3 is not limited thereto, and the servers 3 may include a plurality of servers for performing the same and/or different operations.

The user device 2 may include a communication module for communicating with the robot cleaner 1, the server 3, the home appliances 4, the door opening/closing device 5 and/or the home sensor 6. The user device 2 may include a user interface for receiving user inputs or outputting information for the user. The user device 2 may include at least one processor for controlling operation of the user device 2 and at least one memory for storing a program for controlling the operation of the user device 2.

The user device 2 may be carried by the user or placed at the user's home or office. The user device 2 may include a personal computer, a terminal, a mobile phone, a smart phone, a handheld device, a wearable device, a display device, or the like, without being limited thereto.

A program, i.e., an application, for controlling the robot cleaner 1, the home appliances 4, the door opening/closing device 5 and/or the home sensor 6 may be stored in the memory of the user device 2. The application may be sold in a state of being installed in the user device 2, or may be downloaded and installed from an external server.

The user may access the server 3 and create a user account by running the application installed in the user device 2, and register the robot cleaner 1, the home appliances 4, the door opening/closing device 5 and/or the home sensor 6 in the server 3 by communicating with the server 3 based on the login user account.

For example, when the robot cleaner 1 is operated to access the server 3 according to a procedure guided in the application installed in the user device 2, the server 3 may sign up the robot cleaner 1 with the user account by registering the ID information (e.g., a serial number or a MAC address) of the robot cleaner 1 with the user account. The home appliances 4, the door opening/closing device 5 and/or the home sensor 6 may be registered with the user account in a similar manner. It is obvious that other information than the serial number or MAC address of the device to identify the device may be used for the information required to register the device, such as the robot cleaner 1, the home appliances 4, the door opening/closing device 5 and/or the home sensor 6 with the user account.

The user may use the application installed in the user device 2 to control the robot cleaner 1, the home appliances 4, the door opening/closing device 5 and/or the home sensor 6. For example, when the user signs up with the user account in the application installed in the user device 2, the robot cleaner 1, the home appliances 4, the door opening/closing device 5 and/or the home sensor 6 registered with the user account may show up. When a control command for the robot cleaner 1, the home appliances 4, the door opening/closing device 5 and/or the home sensor 6 is input to the user device 2, the user device 2 may forward the control command to the robot cleaner 1, the home appliances 4, the door opening/closing device 5 and/or the home sensor 6 through the server 3 or directly.

In another example, when the server 3 is provided in the plural and a user account is linked to the identification information of the device in the first server, the linkage information may be registered in the application of the user device 2. Afterward, when logging in to the user account in the application of the user device 2, the second server may communicate with the user device 2 and control the robot cleaner 1, the home appliances 4, the door opening/closing device 5 and/or the home sensor 6 by receiving control information of the robot cleaner 1, the home appliances 4, the door opening/closing device 5 and/or the home sensor 6 from the user device 2. The control information created in the robot cleaner 1, the home appliances 4, the door opening/closing device 5 and/or the home sensor 6 and communication information between the devices may be stored in the second server and transmitted to the user device 2 as well.

The user device 2 may receive various information from the robot cleaner 1, the home appliances 4, the door opening/closing device 5 and/or the home sensor 6 registered with the user account directly or through the server 3.

A network may include both a wired network and a wireless network. The wired network may include a cable network or a telephone network, and the wireless network may include any network that transmits or receives signals in radio waves. The wired network and the wireless network may be connected to each other.

The network may include a wide area network (WAN), such as the Internet, a local area network (LAN) formed around an access point (AP), and a short-range wireless network without an AP. The short-range wireless network may include Bluetooth (institute of electrical and electronics engineers (IEEE) 802.15.1), Zigbee (IEEE 802.15.4), wireless fidelity (Wi-Fi) direct, near field communication (NFC), Z-wave, or the like, without being limited thereto.

The AP may connect the robot cleaner 1, the user device 2, the home appliances 4, the door opening/closing device 5 and/or the home sensor 6 to a WAN connected to the server 3. The robot cleaner 1, the user device 2, the home appliances 4, the door opening/closing device 5 and/or the home sensor 6 may be connected to the server 3 over the WAN.

The AP may use wireless communication, such as Wi-Fi (IEEE 802.11), Bluetooth (IEEE 802.15.1), Zigbee (IEEE 802.15.4), or the like, to communicate with the robot cleaner 1, the user device 2, the home appliances 4, the door opening/closing device 5 and/or the home sensor 6, and use wired communication to access the WAN, but the wireless communication schemes of the AP are not limited thereto.

In various embodiments of the disclosure, the robot cleaner 1 may be directly connected to the user device 2, the server 3, the home appliances 4, the door opening/closing device 5 and/or the home sensor 6 without using the AP.

In various embodiments of the disclosure, the door opening/closing device 5 may be directly connected to the user device 2, the server 3, the home appliances 4, and/or the robot cleaner 1 without using the AP.

The robot cleaner 1 may be connected to the user device 2, the server 3, the home appliances 4, the door opening/closing device 5 and/or the home sensor 6 over a long-range wireless network or a short-range wireless network.

For example, the robot cleaner 1 may be connected to the user device 2, the home appliances 4, the door opening/closing device 5 and/or the home sensor 6 over a short-range wireless network (e.g., Wi-Fi direct or Bluetooth, or an NFC). In another example, the robot cleaner 1 may use the long-range wireless network (e.g., a cellular communication module) to be connected to the user device 2, the server 3, the home appliances 4, the door opening/closing device 5 and/or the home sensor 6 over the WAN.

The door opening/closing device 5 may communicate with the user device 2, the server 3, the home appliances 4 and/or the robot cleaner 1 over a long-range wireless network or a short-range wireless network.

For example, the door opening/closing device 5 may communicate with the user device 2, the home appliances 4 and/or the robot cleaner 1 over a short-range network (e.g., Wi-Fi direct, Bluetooth or NFC). In another example, the cleaner 1 may use the long-range wireless network (e.g., a cellular communication module) to communicate with the user device 2, the server 3, the home appliances 4, the home sensor 6 and/or the robot cleaner 1 over the WAN.

The robot cleaner 1 may transmit information about an operation or state to the user device 2, the server 3, the home appliances 4, the door opening/closing device 5 and/or the home sensor 6 over the network. For example, the robot cleaner 1 may transmit the information about the operation or state to the user device 2, the server 3, the home appliances 4, the door opening/closing device 5 and/or the home sensor 6 when receiving a request from the server 3, when a particular event occurs in the robot cleaner 1, periodically or in real time.

The door opening/closing device 5 may transmit information about an operation or state to the user device 2, the server 3, the home appliances 4 and/or the robot cleaner 1 over the network. For example, the door opening/closing device 5 may transmit the information about the operation or state to the user device 2, the server 3, the home appliances 4, the home sensor 6 and/or the robot cleaner 1 when receiving a request from the server 3, when a particular event occurs in the door opening/closing device 5, periodically or in real time.

The home sensor 6 may transmit information about indoor space to the user device 2, the server 3, the home appliances 4, the door opening/closing device 5 and/or the robot cleaner 1 over the network. For example, the home sensor 6 may transmit the information about the operation or state to the user device 2, the server 3, the home appliances 4, the door opening/closing device 5 and/or the robot cleaner 1 when receiving a request from the server 3, when a particular event (e.g., detecting a motion of the user) occurs in the home sensor 6, periodically or in real time.

The server 3 may update stored information of the robot cleaner 1, the home appliances 4, the door opening/closing device 5 and/or the home sensor 6 when receiving information from the robot cleaner 1, the home appliances 4, the door opening/closing device 5 and/or the home sensor 6, and transmit the updated information of the robot cleaner 1, the home appliances 4, the door opening/closing device 5 and/or the home sensor 6 to the user device 2 over the network. The updating of the information may include various operations to change the existing information, such as adding new information to the existing information, replacing the existing information with new information, or the like.

The robot cleaner 1 may obtain various information from the user device 2, the server 3, the home appliances 4, the door opening/closing device 5 and/or the home sensor 6 and provide the obtained information to the user. For example, the robot cleaner 1 may obtain information relating to a function of the robot cleaner 1 or various environmental information (e.g., weather, temperature, humidity, or the like) from the server 3 and output the obtained information through the user interface.

In another example, the robot cleaner 1 may obtain opening or closing information of a door on which the door opening/closing device 5 is installed from the server 3.

In another example, the robot cleaner 1 may obtain indoor space information obtained by the home sensor 6 from the server 3.

The robot cleaner 1, the home appliances 4, the door opening/closing device 5 and/or the home sensor 6 may operate according to a control command received from the user device 2 or the server 3. For example, when the robot cleaner 1, the door opening/closing device 5 and/or the home sensor 6 have won prior approval of the user to operate according to a control command of the server 3 even without a user input through the user device 2, the robot cleaner 1 may operate according to the control command received from the server 3. The control command received from the server 3 may include a control command input by the user through the user device 2, a control command based on a preset condition or the like, without being limited thereto.

In various embodiments of the disclosure, the robot cleaner 1, the home appliances 4, the door opening/closing device 5 and/or the home sensor 6 may operate according to a control command received from one another. For example, the door opening/closing device 5 may operate according to a control command received from the robot cleaner 1, the user device 2 and/or the home appliances 4 even without a user input. The control command received from the robot cleaner 1, the user device 2 and/or the home appliances 4 may include a control command input by the user through the robot cleaner 1, the user device 2 and/or the home appliances 4, a control command based on a preset condition, or the like, without being limited thereto.

The user device 2 may transmit information about the user to the robot cleaner 1, the server 3, the home appliances 4, the door opening/closing device 5 and/or the home sensor 6 through the communication module. For example, the user device 2 may transmit information about a location of the user, a physical condition of the user, a preference of the user, a schedule of the user, or the like, to the server 3. The user device 2 may transmit the information about the user to the server 3 according to prior approval of the user.

The robot cleaner 1, the user device 2, the server 3, the home appliances 4, the door opening/closing device 5 and/or the home sensor 6 may use an artificial intelligence (AI) technology to determine a control command. For example, the server 3 may use the AI technology to process the information about the operation or state of the robot cleaner 1, the home appliances 4, the door opening/closing device 5 and/or the home sensor 6 and the information about the user of the user device 2, and based on a result of the processing, the server 3 may transmit the result or a control command to the robot cleaner 1, the user device 2, home appliances 4, the door opening/closing device 5 and/or the home sensor 6.

The robot cleaner 1 may include a robot capable of autonomous traveling. The robot cleaner 1 may have a function to clean indoor space autonomously.

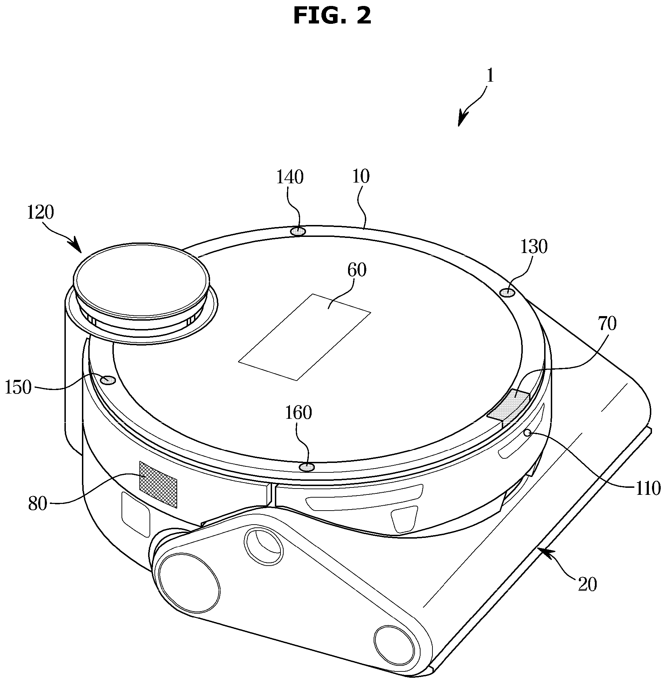

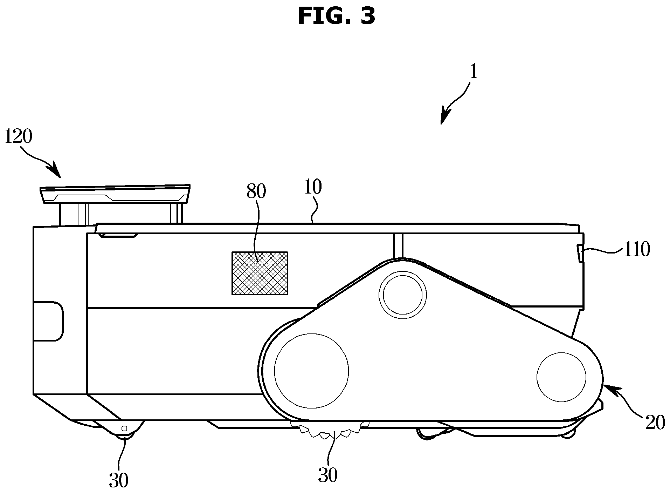

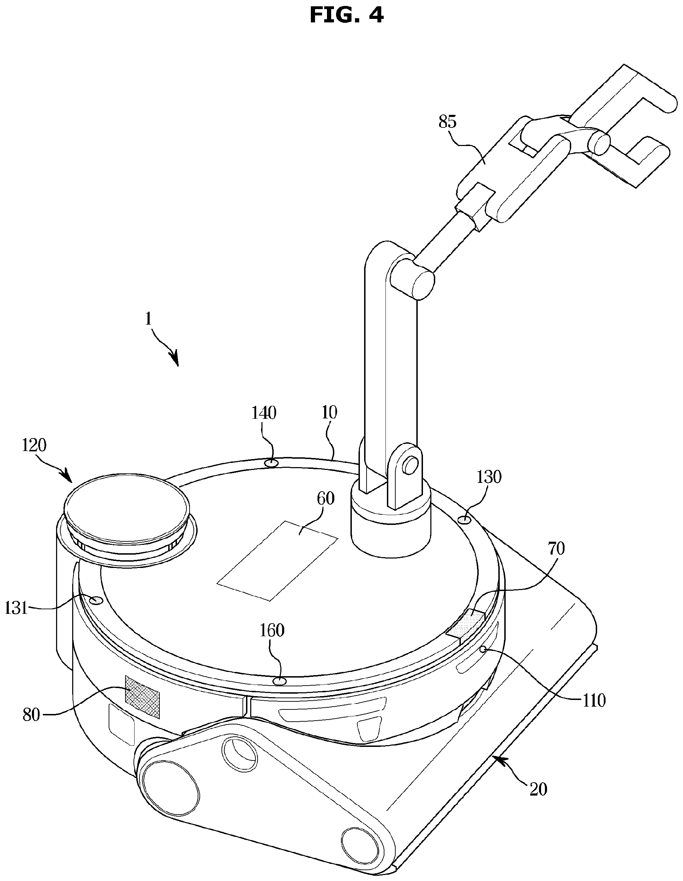

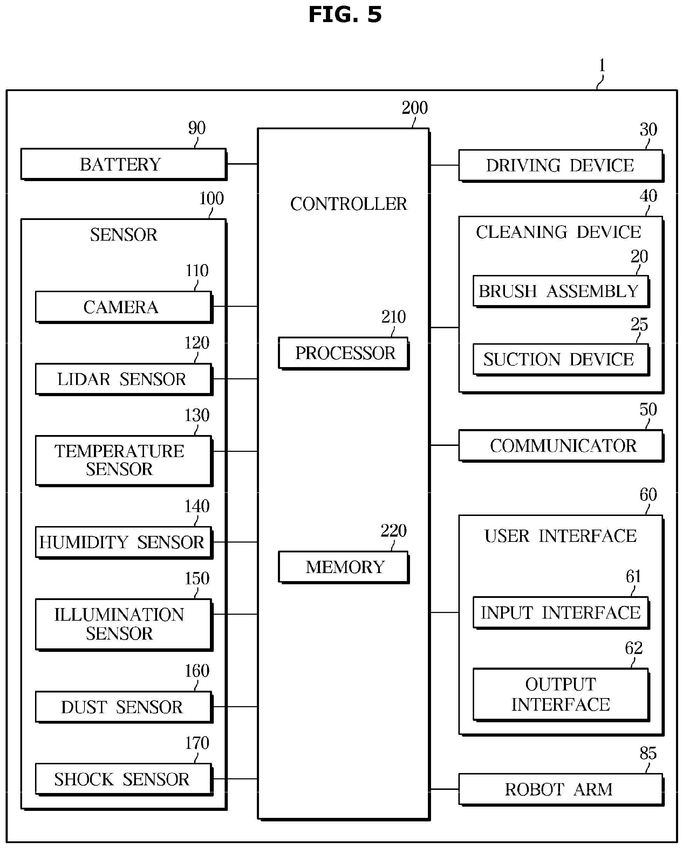

FIG. 2 illustrates an exterior of a robot cleaner according to an embodiment of the disclosure. FIG. 3 illustrates a side of a robot cleaner shown in FIG. 2 according to an embodiment of the disclosure. FIG. 4 illustrates an exterior of a robot cleaner according to an embodiment of the disclosure. FIG. 5 illustrates a control block diagram of a robot cleaner according to an embodiment of the disclosure.

Referring to FIGS. 2, 3, and 4, the terms "forward (or front)", "rearward (or back)","upward (or up), "downward (or down)", "left" and "right" are defined with respect to a direction in which the robot cleaner 1 moves forward, but the terms may not restrict the shapes and positions of the respective components. Furthermore, an expression that indicates a direction is used to clearly understand the disclosure, and the direction may be defined otherwise.

Referring to FIGS. 2, 3, 4, and 5, the robot cleaner 1 may include a main body 10, and a driving device 30 arranged to be rotatable around an axis parallel to the ground to move the main body 10. The main body 10 may include a case that defines an external appearance. The driving device 30 may include at least one wheel. For example, there may be two or more wheels arranged underneath the main body 10. The driving device 30 may include a wheel motor, and the wheel may rotate according to rotational force generated by the wheel motor.

There may be a cleaning device 40 provided on the main body 10 to clean off debris. The cleaning device 40 may include a brush assembly 20 and a suction device 25 for generating suction force.

The brush assembly 20 may include a brush and may be arranged on the front of the main body 10. A brush may scatter debris present in a traveling route of the main body 10. The brush is arranged at a suction port formed on the bottom surface of the main body 10, and scatters the debris to the inside of the suction port while rotating around the rotation axis perpendicular to the forward direction of the main body 10.

The brush assembly 20 may further include a brush motor. Rotational force generated by the brush motor may rotate the brush. Rotation speed of the brush may be controlled by controlling rotation speed of the brush motor. The degree of scattering of debris in a travel route of the robot cleaner 1 may vary depending on the rotation speed of the brush.

In various embodiments of the disclosure, a dust container may be arranged in the main body 10 to store the debris.

The cleaning device 40 may further include a wet cloth device.

The suction device 25 may include a suction fan and a suction motor. The suction fan is operated by rotation force generated by the suction motor to generate suction force. The debris may be drawn by the suction device 25 and brought into the dust container arranged in the main body 10.

The wet cloth device may include a wet cloth pad and a wet cloth motor for rotating the wet cloth pad. The wet cloth pad may wipe the floor while rotating according to the rotation force generated by the wet cloth motor. In various embodiments of the disclosure, the wet cloth may be formed with various materials capable of absorbing water, such as a sponge and/or a cotton.

A user interface 60 may be arranged on the main body 10. Although the user interface 60 is illustrated as being arranged on the top surface of the main body 10, it is not limited thereto. The user interface 60 may obtain a user input. The user interface 60 may provide various information about operations of the robot cleaner 1. The user interface 60 may include at least one input interface 61 and at least one output interface 62.

In various embodiments of the disclosure, the input interface 61 may convert sensory information received from the user to an electric signal. The sensory information may include visual information, audible information and/or tactile information. For example, the visual information may include a gesture of the user, the audible information may include a voice of the user, and the tactile information may include a touch of the user.

For example, the at least one input interface 61 may include a touch pad, a touch screen and/or a button for converting the tactile information to an electric signal, and/or a microphone 70 for converting the audible information to an electric signal. The microphone 70 may detect a voice of the user to detect external sound.

The at least one output interface 62 may send various information relating to the operation of the robot cleaner 1 to the user by outputting the sensory information.

For example, the at least one output interface 62 may send information collected by the robot cleaner 1 to the user. The information collected by the robot cleaner 1 may be output as sensory information, such as an image, voice, or the like.

The robot cleaner 1 may include a speaker 80 as the output interface 62 for outputting various effective sounds and/or voices related to operation of the robot cleaner 1. The microphone 70 and the speaker 80 may be arranged in the main body 10, but positions of the microphone 70 and the speaker 80 are not limited thereto.

The robot cleaner 1 may include various sensors 100. For example, the robot cleaner 1 may include at least one of a camera 110, a light detection and ranging (Lidar) sensor 120, a temperature sensor 130, a humidity sensor 140, an illumination sensor 150 and a dust sensor 160. The sensors may be arranged in the main body 10. At least some of the sensors may be arranged to be exposed to the outside of the main body 10.

The camera 110 may be arranged on the front of the main body 10. The camera 110 may generate an image with a field of view (FOV) toward the front of the main body 10. The location of the camera 110 is not limited to the front of the main body 10. The camera 110 may be arranged in various positions at which to capture surroundings of the robot cleaner 1. The camera 110 may be arranged on a side and/or back of the main body 10.

The camera 110 may include an image sensor for generating image data by collecting incident light from outside. For example, the camera 110 may include at least one of a red-green-blue (RGB) camera for generating a color image by collecting visible rays and an infrared camera for generating an infrared image. The camera 110 may include a binocular camera (stereo camera). The binocular camera may obtain information about depth to a subject by using binocular disparity. The image data obtained by the camera 110 may be transmitted to the controller 200 of the robot cleaner 1. A controller 200 may identify an external object by processing the image data.

The Lidar sensor 120 may emit light (pulse laser) to the outside, and receive light of a preset direction among rays reflecting from the external object. The Lidar sensor 120 is able to rotate 360 degrees clockwise or counterclockwise. As the Lidar sensor 120 may emit light and receive reflected light at 360 degrees, the robot cleaner 1 may use the Lidar sensor 120 to detect external objects from all directions. In various embodiments of the disclosure, the Lidar sensor 120 may be arranged on a rear cover 12 of the main body 10, but the position of the Lidar sensor 120 is not limited thereto.

Lidar data generated by the Lidar sensor 120 may be transmitted to the controller 200 of the robot cleaner 1. The Lidar data may include light propagation direction information and information about a distance to the external object. The controller 200 may process the Lidar data to perform three-dimensional (3D) modeling of the indoor space. The controller 200 may process the Lidar data to obtain 3D data of the external object.

The controller 200 may detect an object around the robot cleaner 1 based on the image data obtained through the camera 110 and/or the Lidar data obtained through the Lidar sensor 120. In an embodiment of the disclosure, the memory 220 may store an AI model for detecting a nearby object based on the image data and/or the Lidar data. In the disclosure, the nearby object may be classified into an inorganic substance (e.g., a thing) and an entity which is a living thing (e.g., human or pet).

The temperature sensor 130 may obtain temperature data of the indoor space in which the robot cleaner 1 travels. The temperature sensor 130 may transmit an electric signal corresponding to the obtained temperature data to the controller 200. The humidity sensor 140 may obtain humidity data of the indoor space in which the robot cleaner 1 travels. The humidity sensor 140 may transmit an electrical signal corresponding to the obtained humidity data to the controller 200.

The illumination sensor 150 may obtain illumination data of the indoor space in which the robot cleaner 1 travels. The illumination sensor 150 may detect solar light that enters the indoor space. The illumination sensor 150 may also detect solar light that reflects from an object in the indoor space. The illumination sensor 150 may also detect lamp light emitted from a lamp arranged in the indoor space. The illumination sensor 150 may transmit an electrical signal corresponding to the obtained illumination data to the controller 200.

The dust sensor 160 may obtain dust data of the indoor space in which the robot cleaner 1 travels. The dust data may include a concentration of dust in the air. The dust data may correspond to air quality data.

In addition to what are illustrated above, various sensors may be arranged in the robot cleaner 1. For example, the robot cleaner 1 may include various sensors, such as a gas sensor for detecting a harmful gas in the air, an air flow meter for measuring an airflow in the indoor space, a shock sensor 170 for detecting shocks with external objects, a gyro sensor for detecting motion of the robot cleaner 1, an inertial measurement unit (IMU) for detecting acceleration, speed and direction of the robot cleaner 1, a time-of-flight (ToF) sensor for measuring a distance to an external object, a radio frequency (RF) sensor, an ultrasound sensor and a radar sensor.

The controller 200 may control the components of the robot cleaner 1. The controller 200 may include a processor 210 and memory 220. The processor 210 may include logic circuits and operation circuits in hardware. The processor 210 may control the electrically connected components of the robot cleaner 1 based on a program, instructions and/or data stored in the memory 220 for an operation of the robot cleaner 1. The controller 200 may be implemented with a control circuit including circuit elements, such as a condenser, an inductor and a resistor. The processor 210 and the memory 220 may be implemented in separate chips or in a single chip. Furthermore, the controller 200 may include a plurality of processors and a plurality of memories.

The memory 220 may store the program, application and/or data for the operation of the robot cleaner 1 and store data created by the processor 210. The memory 220 may include non-volatile memory, such as read only memory (ROM) and flash memory for storing the data for a long time. The memory 220 may include volatile memory for temporarily storing data, such as static random access memory (SRAM) and dynamic random access memory (DRAM).

The driving device 30 may move the main body 10. The driving device 30 may include a wheel and a wheel motor, and the wheel may rotate according to the rotational force generated by the wheel motor. The wheel may be provided in the plural, and each of the plurality of wheels may be controlled separately. As the direction in which the plurality of wheels rotate is changed, a direction in which the robot cleaner 1 travels may be changed. Furthermore, the travel speed of the robot cleaner 1 may be controlled by controlling rotation speed of each of the plurality of wheels.

The suction device 25 may draw in debris scattered by the brush assembly 20 to be moved into the dust container. A suction fan of the suction device 25 may rotate according to the rotational force of a suction motor, and the rotation of the suction fan may produce suction force to draw in the debris. The suction force may be controlled by controlling the rotation speed of the suction fan.

When the cleaning device 40 includes a wet cloth device, a wet cloth pad may be rotated by rotational force of a wet cloth motor.

A communicator 50 may communicate with the user device 2, the server 3, the home appliances 4, the door opening/closing device 5 and/or the home sensor 6 over the network. The controller 200 may obtain various information, various signals and/or various data from the user device 2, the server 3, the home appliances 4, the door opening/closing device 5 and/or the home sensor 6 through the communicator 50. For example, the communicator 50 may receive a remote control signal from the user device 2. The controller 200 may obtain an AI model used to process various data from the server 3 through the communicator 50.

In various embodiments of the disclosure, the communicator 50 may include a short-range communication module and/or a long-range communication module. The communicator 50 may communicate directly with the user device 2, the door opening/closing device 5 and/or the home sensor 6 through the short-range communication module, and also communicate with the user device 2, the door opening/closing device 5 and/or the home sensor 6 through the long-range communication module via the server 3.

The controller 200 may transmit various information to the user device 2, the server 3, the home appliances 4, the door opening/closing device 5 and/or the home sensor 6 through the communicator 50. The information may include signals or data. For example, the controller 200 may transmit cleaning report information through the communicator 50 based on completion of cleaning of a predefined space corresponding to a cleaning map.

The cleaning report information may include various information relating to cleaning of the predefined space, such as information about a non-cleaned zone and/or information about a cleaned zone.

A cleaning area refers to a space to be subjected to cleaning by the robot cleaner 1. The cleaning area may refer to a space functionally classified in a space to be cleaned by the robot cleaner 1 or a space physically divided by a partition member (e.g., a door, furniture, or the like). In other words, the cleaning area may refer to an independent space separable from another cleaning area in a narrow sense. For example, the cleaning area may be a space or a living room divided by a partition member. The cleaning area may include the partition member (e.g., a door).

The non-cleaned zone may refer to an area for which cleaning has not been performed even after cleaning of the predefined space is completed according to a predefined cleaning schedule. The non-cleaned zone may refer to an area corresponding to a predefined space requiring cleaning but to which the robot cleaner 1 has failed to move. For example, the non-cleaned zone may include an area into which the robot cleaner 1 has failed to enter due to an intervening factor, such as an obstacle. The non-cleaned zone may refer to an area that has not been cleaned by the robot cleaner according to the predefined cleaning schedule. The non-cleaned zone may be an area determined as impossible to be reached by the robot cleaner although corresponding to an area to be cleaned according to the predefined schedule.

The controller 200 may receive various information from the user device 2, the server 3, the home appliances 4, the door opening/closing device 5 and/or the home sensor 6 through the communicator 50. For example, the controller 200 may receive information about a cleaning schedule, information about the door opening/cleaning device and/or information about an indoor space through the communicator 50.

The communicator 50 may include various communication circuits. The communicator 50 may include a wireless communication circuit and/or a wired communication circuit. The wireless communication circuit may support various wireless communication, such as a wireless LAN, home RF, infrared communication, UWB communication, Wi-Fi, Bluetooth, Zigbee and/or a long-range wireless network (e.g., cellular communication).

The user interface 60 may obtain a user input. The user interface 60 may provide various information about operations of the robot cleaner 1. The user interface 60 may include the input interface 61 and the output interface 62.

The input interface 61 may convert sensory information received from the user to an electric signal. The electric signal may correspond to a user input. The user input may include various commands. For example, the input interface 61 may obtain a power-on command, a power-off command, a start operation command, a stop operation command, or a charge command. The user input may also be obtained from the user device 2. The input interface 61 may transmit an electrical signal (voltage or current) corresponding to the user input to the controller 200.

The input interface 61 may include at least one of various buttons and a dial to convert tactile information to an electric signal. For example, the input interface 61 may include at least one of a power button to power on or off the robot cleaner 1, a start/stop button to start or stop the cleaning operation, and a docking button to force the robot cleaner 1 to return to the charging station. The buttons may be provided as mechanical buttons or touch buttons. The input interface 61 may include the microphone 70 to convert audible information to an electric signal. The microphone 70 may detect an external sound, such as a voice of the user. The microphone 70 may convert the user voice, which is an analog signal, into a data signal and transmit the data signal to the controller 200. The controller 200 may identify a command included in the user voice by analyzing the user voice, and control the operation of the robot cleaner 1 based on the identified command.

In an embodiment of the disclosure, the controller 200 may include a voice recognition system for recognizing a user voice received through the microphone 70.

The voice recognition system may include a speech to text (STT) engine that converts the user's uttered command input through the microphone 70 to text information, and a chat manager that determines an intent of the user included in the uttered command by analyzing the text.

The chat manager may find the intent of the user corresponding to the uttered command by applying natural language understanding to the text.

In various embodiments of the disclosure, the voice recognition system may further include a text to speech (TTS) module for communication with the user. The TTS module may convert text based information to a voice and output the voice through the output interface 62, e.g., the speaker 80.

The output interface 62 may output information relating to an operation of the robot cleaner 1. The output interface 62 may display information input by the user or information to be provided for the user in various screens. The output interface 62 may display information regarding an operation of the robot cleaner 1 in at least one of an image or text. For example, the output interface 62 may output battery information. Furthermore, the output interface 62 may display a graphic user interface (GUI) that enables the robot cleaner 1 to be controlled. In other words, the output interface 62 may display a user interface element (UI element), such as an icon.

The output interface 62 may be implemented with various devices capable of outputting sensory information. For example, the output interface 62 may include a display for outputting visual information and/or the speaker 80 for outputting audible information.

For example, the output interface 62 may include a liquid crystal display (LCD) panel, a light emitting diode (LED) panel, an organic LED (OLED) panel, or a micro LED panel. The output interface 62 may include a touch display that serves as an input device as well.

The output interface 62 and the input interface 61 may be provided separately or in one device (e.g., the touch display).

The output interface 62 may output not only the information relating to an operation of the robot cleaner 1 but also information for communicating with the user and/or an external device (e.g., the door opening/closing device 5).

The controller 200 may control operation of the robot cleaner 1 based on a command received through the input interface 61 and/or a command received from an external device (e.g., the user device 2, the server 3, the home appliances 4, the door opening/closing device 5 and/or the home sensor 6) through the communicator 50.

The controller 200 may output information obtained by the robot cleaner 1, through the output interface 62, or send the information to an external device through the communicator 50.

The speaker 80 may output information input by the user or information provided for the user in various sounds.

In various embodiments of the disclosure, the robot cleaner 1 may further include a robot arm 85. The robot arm 85 may include an actuator to move a link connected to at least one joint and/or the joint.

The robot arm 85 may operate based on a control signal of the controller 200.

A battery 90 may supply power to various electronic components included in the robot cleaner 1. For example, the battery 90 may supply power to the driving device 30, the cleaning device 40, the communicator 50, the user interface 60, the robot arm 85, a sensor 100 and/or the controller 200. The power supplied from the battery 90 may be supplied by the controller 200 to the respective electronic components.

As described above, the sensor 100 may include an image sensor for obtaining image data with an FOV toward the outside of the main body 10, and a non-image sensor for obtaining data about a surrounding condition of the main body 10 and a motion of the cleaner 1. The image sensor may include the camera 110 and the Lidar sensor 120. The non-image sensor may include the temperature sensor 130, the humidity sensor 140, the illumination sensor 150, the dust sensor 160 and the shock sensor 170. Furthermore, the non-image sensor may include at least one of a gas sensor for detecting a harmful gas in the air, an airflow meter for measuring air volume in the indoor space, a wheel sensor for detecting rotation speed of the wheel, a gyro sensor for detecting a change in posture of the main body 10, or an inertial measurement unit (IMU) for detecting acceleration, speed and direction of the robot cleaner 1.

The controller 200 may use an AI model obtained from the memory 220 or the server 3 to identify an external object from at least one of the image data and the Lidar data and detect a feature of the external object. For example, the controller 200 may detect the size, shape, brightness, definition, transparency, position and/or color of the external object. Furthermore, the controller 200 may estimate a distance to the external object and height of the external object by using depth information included in at least one of the image data and the Lidar data. The controller 200 may identify an obstacle that exists in a travel route of the robot cleaner 1 by processing at least one of the image data and the Lidar data, and control the driving device 30 to avoid the obstacle. The camera 110 and the Lidar sensor 120 are illustrated as a sensor used for identifying an external object, but are not limited thereto. The external object may also be identified from data obtained using various sensors, such as an ultrasound sensor or a radar sensor.

In various embodiments of the disclosure, the controller 200 may obtain environmental data from anther environmental sensor installed in the indoor space. For example, at least one of the illumination sensor, the temperature sensor, the humidity sensor and the dust sensor may be installed on the ceiling, wall, windows, or the like, of the indoor space. The other environmental sensor installed in the indoor space may communicate with the robot cleaner 1.

Components of the robot cleaner 1 are not limited to what are illustrated in FIGS. 2 to 5. Some of the components illustrated in FIG. 5 may be omitted or other components may be further added to the robot cleaner 1. For example, the robot cleaner 1 may include at least one of the aforementioned sensors 110, 120, 130, 140, 150, 160 and 170 described as an example of the sensor 100, and further include an additional sensor. In another example, the robot cleaner 1 may not include the robot arm 85.

For example, the robot cleaner 1 may include a light sensor using an LED instead of the Lidar sensor 120 that irradiates pulse laser. In another example, the robot cleaner 1 may include only the camera 110 without the Lidar sensor 120.

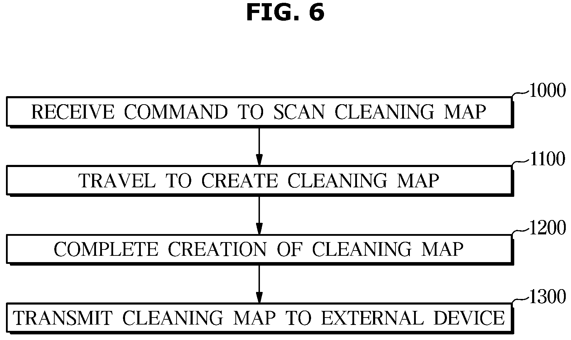

FIG. 6 is a flowchart illustrating a procedure in which a robot cleaner creates a cleaning map according to an embodiment of the disclosure.

Referring to FIG. 6, the controller 200 of the robot cleaner 1 may identify a plurality of cleaning areas (e.g., a plurality of rooms) in an indoor space based on data obtained from the sensor 100 while the robot cleaner 1 is traveling in the indoor space, and create a map (hereinafter, a cleaning map) of the indoor space including the plurality of cleaning areas. The controller 200 may create various types of maps of the plurality of zones in the indoor space based on various data obtained by the sensor 100.

For example, the controller 200 may create the cleaning map of the indoor space by using at least one of the image data and the Lidar data obtained while the robot cleaner 1 is traveling in the indoor space, and identify a location of the robot cleaner 1 in the indoor space. To create the cleaning map, a simultaneous localization and mapping (SLAM) algorithm may be used. The SLAM is an algorithm that is able to make a map of the space in which the robot cleaner 1 is traveling and simultaneously, estimate a location of the robot cleaner 1 in the map. The cleaning map may include structural information of the indoor space. The cleaning map may be stored in the memory 220. The controller 200 may update the cleaning map at preset intervals or whenever a changed indoor structure is detected.

Referring to FIG. 6, the robot cleaner 1 may receive a command to scan the cleaning map, in operation 1000. For example, the user may input the command to scan the cleaning map through the user device 2, or the command to scan the cleaning map may be received by the communicator 50 of the robot cleaner 1 via the server 3. In another example, the user may input the command to scan the cleaning map through the input interface 61. In another example, when the user inputs the command to scan the cleaning map to the user device 2, the command to scan the cleaning map may not pass through the server 3 but may be directly received by the communicator 50 of the robot cleaner 1. The direct communication may be performed through Wi-Fi direct, Bluetooth communication, or NFC communication that enables direct communication between devices.

The command to scan a cleaning map may be a command to request creation of the cleaning map of the indoor space from the robot cleaner 1.

The robot cleaner 1 may travel in the space to be cleaned to create the cleaning map based on reception of the command to scan a cleaning map, in operation 1100. In various embodiments of the disclosure, the robot cleaner 1 may travel in the space to be cleaned, autonomously and under the control of the user. The space to be cleaned may often be an indoor space, but may include an outdoor space, such as a balcony.

The controller 200 may control the driving device 30 to travel for obtaining data (information) about the whole indoor space based on reception of the command to scan the cleaning map.

The robot cleaner 1 may create the cleaning map based on data obtained from the sensor 100 while traveling for creating the cleaning map.

When the robot cleaner 1 has obtained data about the whole indoor space and there is no more indoor space to be obtained, the robot cleaner 1 may complete creation of the cleaning map, in operation 1200.

In various embodiments of the disclosure, the robot cleaner 1 may complete creation of the cleaning map of only an area in which the robot cleaner 1 has traveled in the indoor space, based on a stop-traveling condition (e.g., battery discharge or reception of a user input to stop traveling) satisfied while creating the cleaning map.

The robot cleaner 1 may store the created cleaning map.

The robot cleaner 1 may transmit the complete cleaning map to an external device (e.g., the user device 2, the server 3, the home appliance 4, the door opening/cleaning device 5 and/or the home sensor 6), in operation 1300.

In various embodiments of the disclosure, the robot cleaner 1 may transmit the cleaning map to the server 3, and the server 3 may forward the cleaning map to another device (e.g., the user device 2, the home appliance 4, the door opening/cleaning device 5 and/or the home sensor 6).

After completing creation of the cleaning map, the robot cleaner 1 may clean the cleaning space corresponding to the cleaning map. The cleaning space may include a plurality of cleaning areas.

In another example, while creating a zoned cleaning map of the cleaning space, the robot cleaner 1 may perform cleaning for some cleaning areas allowed to be cleaned in the created cleaning map even when the creation of the cleaning map of all the indoor space to be cleaned has not been completed.

In various embodiments of the disclosure, the cleaning map may be sent to the robot cleaner 1 and/or the server 3 by the user uploading a drawing corresponding to the indoor space through the user device 2.

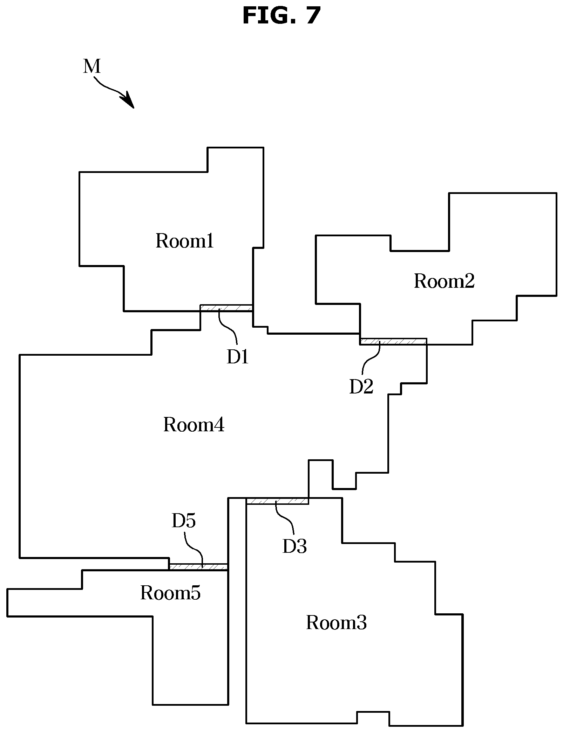

FIG. 7 illustrates a cleaning map according to an embodiment of the disclosure.

Referring to FIG. 7, shown is an example of a cleaning map M.

As described above, the robot cleaner 1 may create a map (cleaning map) of an indoor space while traveling in the indoor space. The robot cleaner 1 may create the cleaning map M including a plurality of zones in the indoor space by using at least one of image data and Lidar data obtained while traveling in the indoor space. In FIG. 7, illustrated is an indoor space divided into 5 cleaning areas. For convenience of explanation, the cleaning area will now be defined as a room.

The indoor space may be divided into at least one room (e.g., a first room Room 1, a second room Room 2, a third room Room 3, a fourth room Room 4 and a fifth room Room 5).

Each of the at least one room may be separated by at least one partition member (e.g., doors). The robot cleaner 1 may recognize an independent space that may be separated by at least one partition member as one room, and define different rooms as different cleaning areas in the entire cleaning space.

The cleaning map M may include information about at least one room, each of which is separable from another room by at least one door, and information about at least one door to separate the at least one room. The information about the door may include a type of the door (e.g., a sliding door, a hinged door, or the like), height of the door, width of the door and/or presence of the door.

In general, one room may include one door (or may connected to one door). For example, the first room Room 1 may include a first door D1. The first door D1 may connect or disconnect the first room to or from an external space.

Among the plurality of rooms, a room including multiple doors (or a room connected to multiple doors), e.g., the fourth room Room 4, may be defined as a common room.

For example, the fourth room Room 4 may include the first door D1, a second door D2, a third door D3 and a fourth door D4.

The cleaning map M may include information about the common room. For example, the room including the multiple doors may be classified and stored as the common room.

Referring to FIG. 7, the indoor space is illustrated as being divided by four doors D1, D2, D3 and D5 into five rooms. The robot cleaner 1 may reflect information about the doors in the cleaning map M when creating the cleaning map M.

In various embodiments of the disclosure, information about an area forbidden for the robot cleaner 1 to enter (e.g., an area set by the user as a no-trespassing area) or an area impossible to enter (e.g., a bathroom) may not be obtained. In various embodiments of the disclosure, when the user inputs a map of the indoor space in person through the user device 2, the information about the area forbidden for the robot cleaner 1 or the area impossible to enter (e.g., bathroom) may also be updated in the cleaning map.

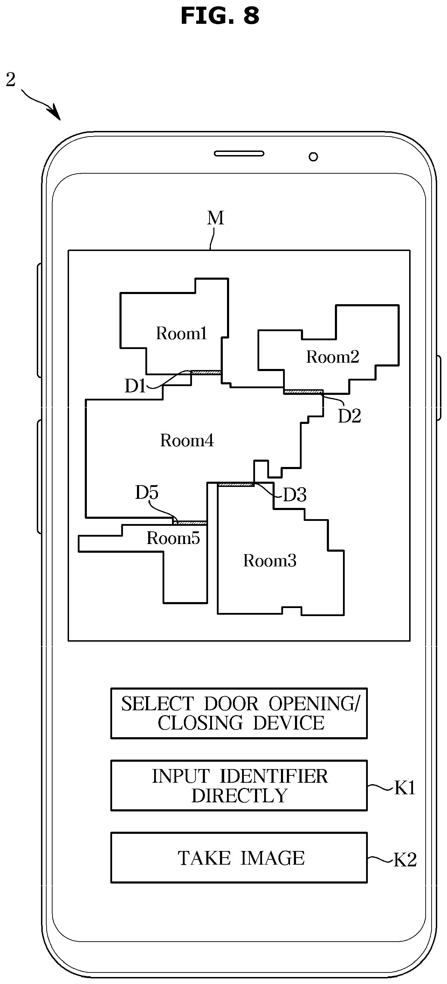

FIG. 8 illustrates an interface for applying a door opening/closing device to a cleaning map according to an embodiment of the disclosure.

Referring to FIG. 8, it may be seen that the cleaning map M created by the robot cleaner 1 is sent to the user device 2 and that the user device 2 displays the cleaning map M.

In the disclosure, it is obvious that the user's performing various settings through the user device 2 may be replaced by the user's performing various settings through the user interface 60 of the robot cleaner 1.

The user may perform various settings based on the cleaning map M displayed on the user device 2, such as setting a cleaning schedule, setting a name of each of the at least one room, or applying a door opening/closing device installed on each of the at least one door to the cleaning map M.

For example, the user may modify a name of the first room to a 'study room', modify a name of the second room to a 'main room', a name of the third room to a 'son's room', a name of the fourth room to a ' living room', and a name of the fifth room 5 to a 'storage'.

The user may set a cleaning schedule for each of the at least one room through the user device 2. For example, the user may set a cleaning schedule including a cleaning cycle, cleaning sequences, a cleaning date and/or cleaning hour for each of the at least one room, and the set cleaning schedule may be sent to the server 3 or the root cleaner 1.

The cleaning schedule stored in the server 3 may be sent to the robot cleaner 1, and the robot cleaner 1 may perform cleaning according to the cleaning schedule set by the user. In another example, the cleaning schedule set in the user device 2 may be sent directly to the robot cleaner 1. In another example, the user may input a cleaning schedule directly through the user interface of the robot cleaner 1.

In various embodiments of the disclosure, the robot cleaner 1 may transmit cleaning report information to the server 3 after performing cleaning according to the cleaning schedule set by the user. The server 3 may forward the cleaning report information to the user device 2, the home appliances 4, the door opening/closing device 5 and/or the home sensor 6. In another example, the cleaning report information created in the robot cleaner 1 may be sent directly to the user device 2 from the robot cleaner 1.

The user may apply the door opening/closing device 5 to each of the at least one door through the user device 2. With the application of the door opening/closing device 5 to each of the at least one door, information about the door opening/closing device 5 to open/close each of the at least one door included in the cleaning map M may be stored in the information of the cleaning map M. In other words, the cleaning map M may be updated based on the information about the door opening/closing device 5.

In an embodiment of the disclosure, the user may input the information about the door opening/closing device 5 installed on the at least one door through the user device 2.

The inputting of the information about the door opening/closing device 5 may include inputting identification information of the door opening/closing device 5.

For example, the user may select a door in the cleaning map M output on the user device 2, and input the identification information (e.g., serial number or a MAC address) of the door opening/closing device 5 installed on the selected door.

The inputting of the identification information of the door opening/closing device 5 may be performed in various methods, such as taking an image of identification (e.g., barcodes, QR code and/or text) attached to the door opening/closing device 5 and/or the door installed on the door opening/closing device 5 and/or manually inputting information corresponding to the identification attached to the door opening/closing device 5 to the user device 2.

For example, the user may select one of the plurality of doors D1, D2, D3 and D5 presented on the cleaning map M, and select element K1 for inputting an identification in person to input the identification corresponding to the selected door.

In another example, the user may select one of the plurality of doors D1, D2, D3 and D5 presented on the cleaning map M, and select element K2 for taking a picture to capture information corresponding to the selected door.

In an embodiment of the disclosure, the robot cleaner 1 may directly obtain information of the door opening/closing device 5. The robot cleaner 1 may transmit the information of the door opening/closing device 5 to the server 3.

For example, the robot cleaner 1 may approach the door opening/closing device 5 or a door on which the door opening/closing device 5 is installed, and capture an identifier attached to the door opening/closing device 5 or the door on which the door opening/closing device 5 is installed through the camera 110.

The cleaning map M may be updated based on the information of the door opening/closing device 5. The updated cleaning map M may be sent to the robot cleaner 1, the user device 2, the server 3, the home appliances 4, the door opening/closing device 5 and/or the home sensor 6.

The information of the door opening/closing device 5 may include, for example, identification information of the door opening/closing device 5 and/or data to operate the door opening/closing device 5.

The robot cleaner 1, the user device 2, the server 3, the home appliances 4 and/or the home sensor 6 may register a plurality of door opening/closing devices 5 with a user account, and transmit a control command to the door opening/closing device 5 corresponding to the door D1, D2, D3 or D5 located on the cleaning map M.

According to an embodiment of the disclosure, the information of the door opening/closing device 5 corresponding to each of the at least one door may be reflected in the cleaning map M, making it easy to manage the door opening/closing device 5.

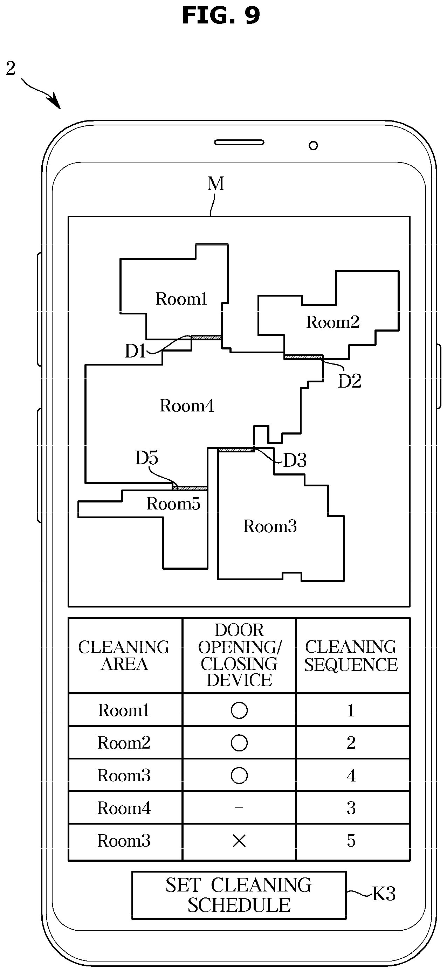

FIG. 9 illustrates an interface for setting cleaning sequences with respect to a cleaning map according to an embodiment of the disclosure.

Referring to FIG. 9, the user may set a cleaning schedule of the robot cleaner 1 through the user device 2. However, as described above, in various embodiments of the disclosure, it is obvious that the user may set the cleaning schedule through the user interface 60 of the robot cleaner 1.

The cleaning sequences of a plurality of rooms on the cleaning map M may be set by the user or set automatically. For example, the robot cleaner 1 may automatically set the cleaning sequences of the plurality of rooms based on a cleaning history.

The user device 2 may provide an element K3 for setting the cleaning schedule for each of the plurality of rooms (e.g., the first room (Room 1), the second room (Room 2), the third room (Room 3), the fourth room (Room 4) and the fifth room (Room 5)).

The user may set the cleaning schedule for the plurality of rooms through the user device 2. Although only the cleaning sequences of the plurality of rooms are shown, the cleaning schedule is not limited to the cleaning sequences. For example, the cleaning schedule may include a start cleaning time (e.g., at 9 o'clock), a cleaning cycle for each of the plurality of rooms (e.g., every other day, every other week, or the like), and/or a cleaning mode for each of the plurality of rooms (e.g., powerful mode, low-noise mode, or the like). The powerful mode may refer to an intensity of the suction force of the suction device 25 being set to a first intensity, and the low-noise mode may refer to an intensity of the suction force of the suction device 25 being set to a second intensity weaker than the first intensity.

The cleaning map M may include information about the door opening/closing device 5 installed on the door D1, D2, D3 or D5 corresponding to each of the plurality of rooms. The user device 2 may output information about whether there is the door opening/closing device 5 installed on a door corresponding to each of the plurality of rooms through a user interface.

Settings about a cleaning mode for each of the plurality of rooms may include a setting for allowing a control authority of the door opening/closing device 5 corresponding to each of the plurality of rooms.

When the control authority of the door opening/closing device 5 is allowed by the user, the robot cleaner 1 and/or the server 3 is able to control the door opening/closing device 5 even without an input from the user.

When the control authority of the door opening/closing device 5 is not allowed, the robot cleaner 1 and/or the server 3 is unable to control the door opening/closing device 5.

According to an embodiment of the disclosure, by allowing or disallowing the control authority of the door opening/closing device 5 for the robot cleaner 1 and/or the server 3, the door opening/closing device 5 may be prevented from automatically operating without the intervention of the user.

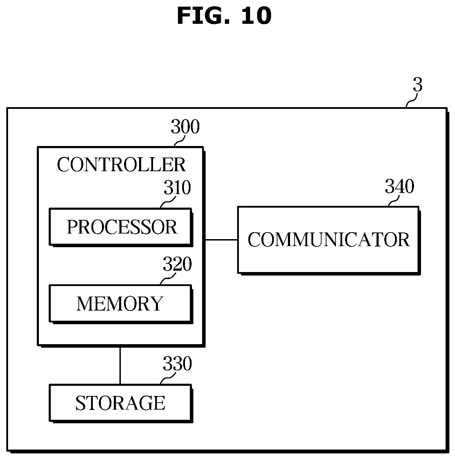

FIG. 10 is a control block diagram of a server device according to an embodiment of the disclosure.

Referring to FIG. 10, the server 3 may include a controller 300, a communicator 340 and/or a storage 330.

The controller 300 may control the components of the server 3.

The controller 300 may include a processor 310 and memory 320. The processor 310 may include logic circuits and operation circuits in hardware. The processor 310 may control the electrically connected components of the server 3 based on a program, instructions and/or data stored in the memory 320 for an operation of the server 3. The controller 300 may be implemented with a control circuit including circuit elements, such as a condenser, an inductor and a resistor. The processor 310 and the memory 320 may be implemented in separate chips or in a single chip. Furthermore, the controller 300 may include a plurality of processors and a plurality of memories.

The memory 320 may store the program, application and/or data for operation of the server 3 and store data created by the processor 310. The memory 320 may include non-volatile memory, such as read-only memory (ROM) and flash memory for storing the data for a long time. The memory 320 may include volatile memory for temporarily storing data, such as static random access memory (SRAM) and dynamic random access memory (DRAM).

The storage 320 may be an example of the memory 320, and may include non-volatile memory, such as ROM and flash memory for storing the data for a long time.

The storage 330 may store various information, such as information about a user account, information about a device registered with the user account and/or information about the cleaning map M. The storage 330 may include a cloud device, a data drive device, or a data station device.

The communicator 340 may communicate with an external device (e.g., the robot cleaner 1, the user device 2, the home appliances 4, the door opening/closing device 5 and/or the home sensor 6).

For this, the communicator 340 may include a communication module for communicating with the external device.

The controller 300 may process data received from the external device through the communicator 340. The controller 300 may store the processed data in the memory 320 and/or the storage 330.

For example, the controller 300 may process image data received from the home sensor 6.

The controller 300 may transmit information and/or a control command to the external device through the communicator 340 based on processing of the data received from the external device.

For example, the controller 300 may transmit information about the indoor space to the robot cleaner 1 based on processing of the image data received from the home sensor 6.

In another example, the controller 300 may transmit a control command to open or close a door to the door opening/closing device 5 based on processing of the image data received from the home sensor 6.

Components of the server 3 are not limited to what are illustrated in FIG. 10. Some of the components illustrated in FIG. 10 may be omitted or other components may be further added to the server 3.

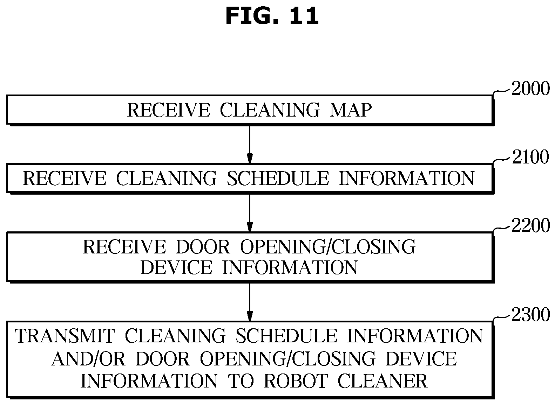

FIG. 11 is a flowchart illustrating operations performed by a server device according to an embodiment of the disclosure.

Referring to FIG. 11, the server 3 may receive the cleaning map M from an external device (e.g., the robot cleaner 1, the user device 2, the home appliances 4, the door opening/closing device 5 and/or the home sensor 6), in operation 2000.

In an embodiment of the disclosure, the server 3 may receive the cleaning map M created by the robot cleaner 1. In another embodiment of the disclosure, the server 3 may receive the cleaning map M input through the user device 2.

The server 3 may receive cleaning schedule information input through the user device 2, in operation 2100.

The user may input a setting about a cleaning schedule through the user device 2, and transmit the cleaning schedule information to the server 3 based on the input of the setting about the cleaning schedule.

The server 3 may temporarily and/or permanently store the cleaning schedule information.

The server 3 may receive information of the door opening/closing device 5 input through the user device 2, in operation 2200.

The user may input a setting about the door opening/closing device 5 through the user device 2, and transmit the information of the door opening/closing device 5 to the server 3 based on the input of the setting about the door opening/closing device 5.

The server 3 may temporarily and/or permanently store the information of the door opening/closing device 5.

The server 3 may transmit the cleaning schedule information and/or the information of the door opening/closing device 5 to the robot cleaner 1, in operation 2300.

The robot cleaner 1 may store the cleaning schedule information and/or the information of the door opening/closing device 5 received from the server 3.

The robot cleaner 1 may perform cleaning with respect to the cleaning map M based on the cleaning schedule information.

The robot cleaner 1 may control the door opening/closing device 5 based on the information of the door opening/closing device 5.

In various embodiments of the disclosure, it is obvious that the robot cleaner 1 may obtain the cleaning schedule information and/or the information of the door opening/closing device 5 through the camera 110, from the user device 2, or through the user interface 60.

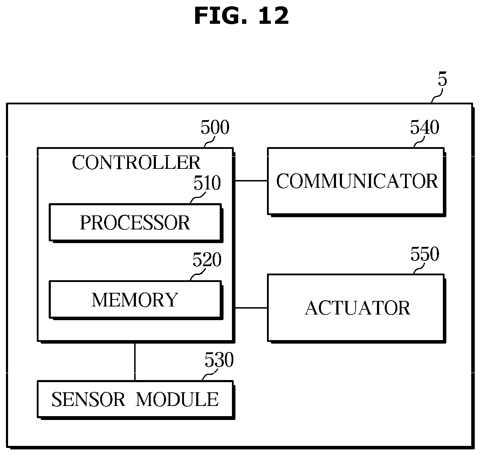

FIG. 12 is a control block diagram of a door opening/closing device according to an embodiment of the disclosure.

Referring to FIG. 12, the door opening/closing device 5 refers to a device that is installed on a door to open or close the door.

In various embodiments of the disclosure, the door opening/closing device 5 may include a controller 500, a sensor module 530, a communicator 540 and/or an actuator 550.

The controller 500 may control the components of the door opening/closing device 5. The controller 500 may include a processor 510 and memory 520. The processor 510 may include logic circuits and operation circuits in hardware. The processor 510 may control the electrically connected components of the door opening/closing device 5 based on a program, instructions and/or data stored in the memory 520 for an operation of the door opening/closing device 5. The controller 500 may be implemented with a control circuit including circuit elements, such as a condenser, an inductor and a resistor. The processor 510 and the memory 520 may be implemented in separate chips or in a single chip. Furthermore, the controller 500 may include a plurality of processors and a plurality of memories.

The memory 520 may store the program, application and/or data for the operation of the door opening/closing device 5 and store data created by the processor 510. The memory 520 may include non-volatile memory, such as ROM and flash memory for storing the data for a long time. The memory 520 may include volatile memory for temporarily storing data, such as SRAM and DRAM.

The controller 500 may operate the actuator 550 based on information and/or a command received through the sensor module 530 and/or the communicator 540.

The controller 500 may operate the actuator 550 to open or close the door on which the door opening/closing device 5 is installed. For example, the controller 500 may operate the actuator 550 to close the door on which the door opening/closing device 5 is installed, based on a door closing condition being satisfied. In another example, the controller 500 may operate the actuator 550 to open the door on which the door opening/closing device 5 is installed, based on a door opening condition being satisfied.

The satisfying of the door closing condition may include detecting the door closing condition through the sensor module 530 and/or receiving a door closing command through the communicator 540.

The satisfying of the door opening condition may include detecting the door opening condition through the sensor module 530 and/or receiving a door opening command through the communicator 540.

The sensor module 530 may include at least one sensor capable of detecting an object. For example, the sensor module 530 may include a proximity sensor (e.g., an ultrasound sensor, a camera, a radar sensor, an infrared sensor, a thermal sensor, a photo sensor, or the like) capable of detecting approaching of the object.

The sensor module 530 may have a predetermined detection area. For example, the sensor module 530 may have a detection area directed to some areas around the door on which the door opening/closing device 5 is installed.

The sensor module 530 may detect an object in the predetermined detection area.

In various embodiments of the disclosure, the sensor module 530 may include a button to detect a tactile input. The button may include various buttons, such as a push button that generates an electric signal based on being pushed and/or a touch button that generates an electric signal based on being touched.

In various embodiments of the disclosure, the sensor module 530 may include a microphone that detects an audio input. The microphone may convert a voice signal to an electric signal.

The communicator 540 may communicate with an external device (e.g., the robot cleaner 1, the user device 2, the server 3, the home appliances 4 and/or the home sensor 6).

For this, the communicator 540 may include a communication module for communicating with the external device.

In various embodiments of the disclosure, the communicator 540 may include a short-range communication module (e.g., an NFC communication module) for direct communication with the robot cleaner 1. The communicator 540 may include a long-range communication module for communication with the server 3.

In an embodiment of the disclosure, the communicator 540 may receive a control command directly from the robot cleaner 1, the user device 2, the server 3, the home appliances 4 and/or the home sensor 6.

In another embodiment of the disclosure, the communicator 540 may receive a control command from the robot cleaner 1, the user device 2, the home appliances 4 and/or the home sensor 6 via the server 3.

The control command may include a door closing command and/or a door opening command.

The actuator 550 may be configured to be able to open or close the door. For example, the actuator 550 may be connected to a drive system that is able to open or close the door to open or close the door. In another example, the actuator 550 may be connected to a sliding member that is able to make the door slide to open or close the door.

In an embodiment of the disclosure, the controller 500 may control the actuator 550 to open or close the door based on a predetermined door opening or closing condition being detected through the sensor module 530.

For example, the controller 500 may control the actuator 550 to close or open the door based on a button being pressed while the door is open or closed.

In another example, the controller 500 may control the actuator 550 to close or open the door based on an object being detected in a predetermined area through a proximity sensor while the door is open or closed.

In another example, the controller 500 may control the actuator 550 to close or open the door based on a tactile input being detected through a button while the door is open or closed.

In an embodiment of the disclosure, the button may include a door opening button and a door closing button, and the controller 500 may control the actuator 550 to open the door based on a tactile input being detected through the door opening button and control the actuator 550 to close the door based on a tactile input being detected through the door closing button.

In another example, the controller 500 may control the actuator 550 to open or close the door based on a voice command to open or close the door being received through a microphone.

In an embodiment of the disclosure, the controller 500 may control the actuator 550 to open or close the door based on a door opening or closing command being received through the communicator 540. The door opening or closing command may include a door closing command and/or a door opening command, and as described above, may be received from an external device (e.g., the robot cleaner 1, the user device 2, the server 3, the home appliances 4 and/or the home sensor 6).

The door opening or closing condition is not limited to the aforementioned example.

Components of the door opening/closing device 5 are not limited to what are illustrated in FIG. 12. Some of the components illustrated in FIG. 12 may be omitted or other components may be further added to the door opening/closing device 5.

For example, the door opening/closing device 5 may further include a battery for supplying power and/or a power module for receiving power from an external power source.

In another example, the sensor module 530 may include one or more of the plurality of aforementioned sensors.

In another example, the door opening/closing device 5 may include only one of the sensor module 530 or the communicator 540.

According to an embodiment of the disclosure, the door opening/closing device 5 may operate in various methods without the intervention of the user.

Furthermore, according to an embodiment of the disclosure, the user is able to operate the door opening/closing device 5 through various methods, so the user convenience may increase.

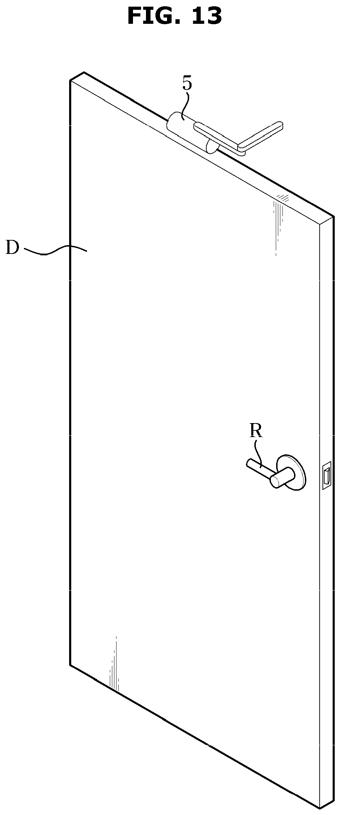

FIG. 13 illustrates an exterior of a door opening/closing device according to an embodiment of the disclosure.

Referring to FIG. 13, the door opening/closing device 5 may be installed on the door D.

The door opening/closing device 5 may have different mechanisms depending on the types of the door D (e.g., a sliding door or a hinged door).

The door opening/closing device 5 may include a hinge and/or a rail system. The hinge may have a mechanism that enables the door D to rotate, and the rail system may include a mechanism to move the door D.

The hinge may be installed between an edge of the door D and a door frame.

In various embodiments of the disclosure, the door opening/closing device 5 may be interlocked with a door handle R, and the door may be opened after the door D is unlocked.

In various embodiments of the disclosure, the door opening/closing device 5 may open or close the door D without being interlocked with the door handle R. In this case, the door being locked may correspond to a state in which the actuator 550 of the door opening/closing device 5 is fixed while the door is closed.

In various embodiments of the disclosure, the exterior of the door opening/closing device 5 is not limited to what is shown in FIG. 13, and may be any device that is able to automatically open or close the door.

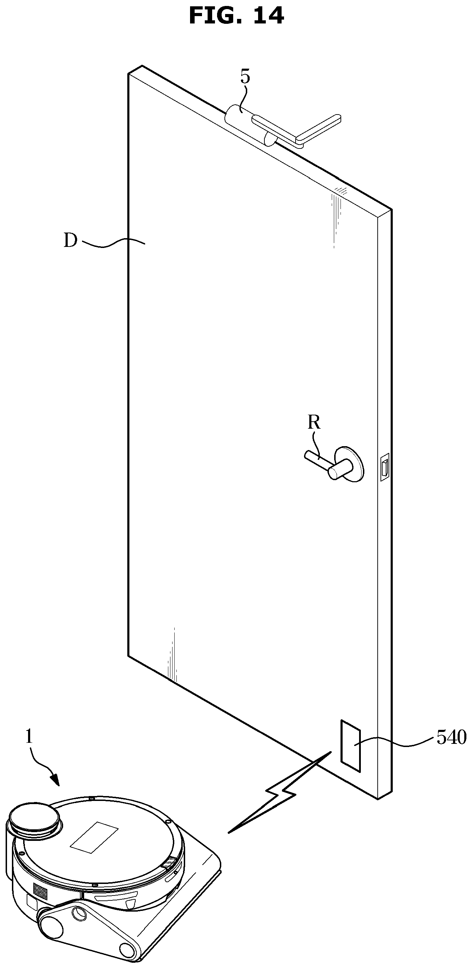

FIGS. 14, 15, 16, 17, and 18 are diagrams illustrating a method for operating a door opening/closing device according to various embodiments of the disclosure.

In various embodiments of the disclosure, the door opening/closing device 5 may be operated not only by the user's manipulation but also according to a certain operation of the robot cleaner 1.

The robot cleaner 1 may perform control to close or open the door D in at least one method.

Referring to FIG. 14, the robot cleaner 1 may open or close the door D by communicating directly with the communicator 540 of the door opening/closing device 5.

The communicator 540 may include a short-range communication module (e.g., an NFC communication module). The communicator 540 may be arranged on one side of the door D. For example, the communicator 540 may be arranged in a lower portion of the door D that corresponds to the height of the cleaning device 40.

The communicator 540 may exchange data with the robot cleaner 1 approaching within a predetermined range.

The robot cleaner 1 may have stored information of the door opening/closing device 5. The information of the door opening/closing device 5 may include information for operating the door opening/closing device 5.

The information for operating the door opening/closing device 5 may include data for operation method of the door opening/closing device 5 and/or operation of the door opening/closing device 5.

For example, the information for operating the door opening/closing device 5 may include encrypted data corresponding to a door opening or closing command.

The door opening/closing device 5 may receive the door opening or closing command directly from the robot cleaner 1 through the communicator 540. For example, the door opening/closing device 5 may operate in response to predetermined encrypted data being received through the communicator 540.

The robot cleaner 1 may transmit the encrypted data corresponding to the door opening or closing command to the communicator 540 of the door opening/closing device 5 through the communicator 50. For example, the robot cleaner 1 may transmit the encrypted data corresponding to the door opening or closing command to the communicator 540 of the door opening/closing device 5 by tagging on the communicator 540 of the door opening/closing device 5.

However, the method by which the robot cleaner 1 transmits the encrypted data corresponding to the door opening or closing command to the communicator 540 of the door opening/closing device 5 through the communicator 50 is not limited thereto.

The robot cleaner 1 may open or close the door D by transmitting the door opening or closing command to the door opening/closing device 5 through the communicator 50.

For example, the controller 200 may perform control to close the door D by controlling the communicator 50 to transmit the door closing command to the door opening/closing device 5.

In another example, the controller 200 may perform control to open the door D by controlling the communicator 50 to transmit the door opening command to the door opening/closing device 5.

According to an embodiment of the disclosure, the robot cleaner 1 may directly control opening or closing of the door.

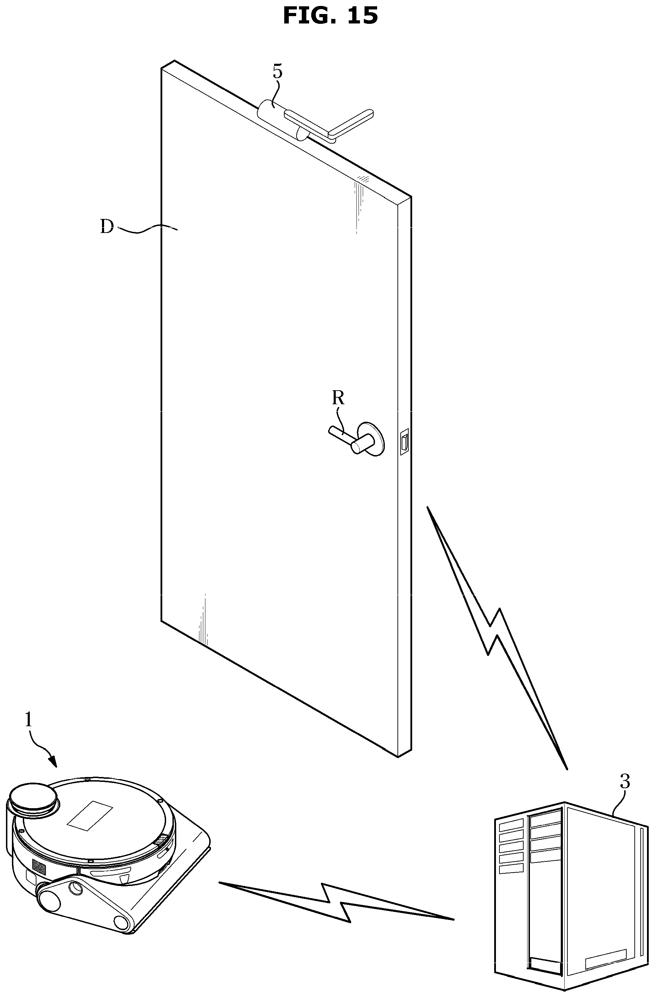

Referring to FIG. 15, the robot cleaner 1 may open or close the door D by communicating with the communicator 540 of the door opening/closing device 5 through an external device (e.g., the server 3). Although FIG. 15 only shows that the robot cleaner 1 controls the door opening/closing device 5 through the server 3, the server 3 may be replaced by the user device 2, the home appliance 4 and/or the home sensor 6.

The communicator 540 may be connected to a network (WAN or LAN, see FIG. 1) to communicate with an external device (e.g., the user device 2, the server 3, the home appliance 4 and/or the home sensor 6).

The communicator 540 may exchange data with the external device.

The external device may have stored information of the door opening/closing device 5, and the information of the door opening/closing device 5 may include data for operating the door opening/closing device 5.

For example, the robot cleaner 1, the user device 2, the server 3, the home appliance 4 and/or the home sensor 6 may have stored the information of the door opening/closing device 5.

The data for operating the door opening/closing device 5 may include encrypted data corresponding to the door opening or closing command.

The door opening/closing device 5 may receive the door opening or closing command from the external device through the communicator 540. For example, the door opening/closing device 5 may operate in response to predetermined encrypted data being received through the communicator 540.

In an embodiment of the disclosure, the robot cleaner 1 may perform control to close the door D by transmitting the door opening command or the door closing command to the door opening/closing device 5 through the external device.

For example, the controller 200 may perform control to open or close the door by controlling the communicator 50 to transmit the door opening command or the door closing command to the door opening/closing device 5 through the external device.

The controlling of the communicator 50 to transmit the door opening command or the door closing command to the door opening/closing device 5 may include controlling the communicator 50 to transmit a door opening request or a door closing request of the door opening/closing device 5 to the external device.

The robot cleaner 1 may transmit the door opening or closing request to the external device (e.g., the user device 2, the server 3, the home appliance 4 and/or the home sensor 6) through the communicator 50.

In response to the door opening or closing request being received from the robot cleaner 1, the external device may be configured to transmit the door opening or closing command to the door opening/closing device 5.

For example, in response to the door opening or closing request being received from the robot cleaner 1, the server 3 may be configured to transmit the door opening or closing command to the door opening/closing device 5.

The controller 200 may perform control to open or close the door D by controlling the communicator 50 to transmit the door opening command or the door closing command to the door opening/closing device 5 through the external device.

According to an embodiment of the disclosure, the robot cleaner 1 may use an external device that is able to communicate with the door opening/closing device 5 to operate the door opening/closing device 5.

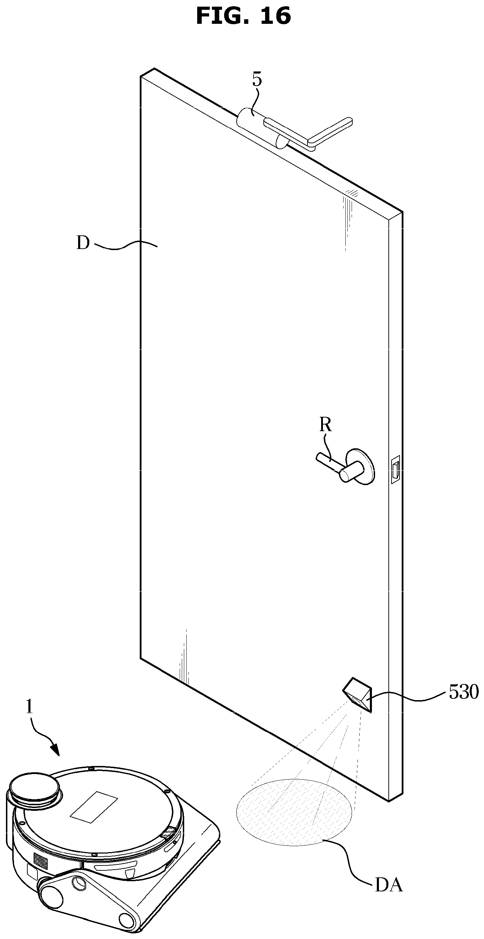

Referring to FIG. 16, the robot cleaner 1 may open or close the door D by controlling the sensor module 530 of the door opening/closing device 5 to detect a predetermined door opening or closing condition.

The sensor module 530 may include a proximity sensor capable of detecting approaching of an object. The proximity sensor may detect an object within a predetermined detection area DA. The door opening/closing device 5 may operate based on an object being detected within the predetermined detection area DA through the sensor module 530.

The robot cleaner 1 may have stored information of the door opening/closing device 5, and the information of the door opening/closing device 5 may include information for operating the door opening/closing device 5.

The information for operating the door opening/closing device 5 may include information about a location of the predetermined detection area DA.

In various embodiments of the disclosure, the door opening/closing device 5 may include a light emitter that distinguishes the predetermined detection area DA from other areas to provide light into the predetermined detection area DA.

In an embodiment of the disclosure, the robot cleaner 1 may identify the location of the predetermined detection area DA based on the information for operating the door opening/closing device 5. In another embodiment of the disclosure, the robot cleaner 1 may identify an area distinguished from other areas by light provided from the door opening/closing device 5 through a light detection sensor or the camera 110 as the predetermined detection area DA.

The robot cleaner 1 may operate the door opening/closing device 5 by moving into the predetermined detection area DA.

The controller 200 may perform control to open or close the door D by controlling the driving device 30 to move the robot cleaner 1 into the predetermined detection area DA.

The door opening/closing device 5 may open or close the door D based on the sensor module 530 detecting the robot cleaner 1 entering into the predetermined detection area DA while the door D is closed or opened.

According to an embodiment of the disclosure, the robot cleaner 1 may open or close the door D without wireless communication with the door opening/closing device 5.

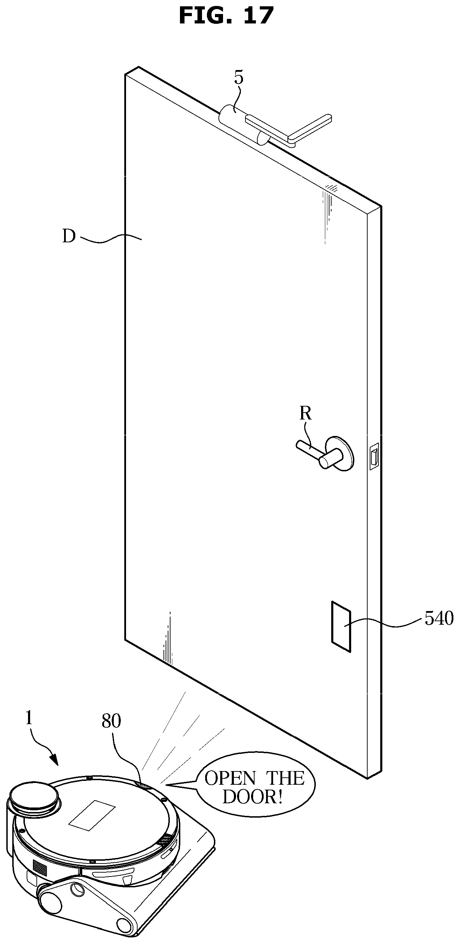

Referring to FIG. 17, the robot cleaner 1 may open or close the door D by controlling the sensor module 530 of the door opening/closing device 5 to detect a predetermined door opening or closing condition.

The sensor module 530 may include a microphone that is able to detect a voice command to open or close the door. The door opening/closing device 5 may operate based on the voice command to open or close the door being received through the sensor module 530.

The voice command to open or close the door may be a preset voice command. For example, a voice "open the door" may correspond to a voice command to open the door, and a voice "close the door" may correspond to a voice command to close the door. Examples of the voice command to open or close the door are not, however, limited thereto, and may be changed by the user's setting. For example, the voice command may be set to an onomatopoeic word and/or a sound effect, such as the sound of clapping.

The robot cleaner 1 may have stored information of the door opening/closing device 5, and the information of the door opening/closing device 5 may include information for operating the door opening/closing device 5.

The information for operating the door opening/closing device 5 may include information about the voice command to open or close the door.

In an embodiment of the disclosure, the robot cleaner 1 may identify the voice command to open or close the door based on the information for operating the door opening/closing device 5.

The robot cleaner 1 may perform control to open or close the door D by outputting a predetermined voice command to open or close the door through the speaker 80.

The controller 200 may perform control to open or close the door D by controlling the speaker 80 to output a predetermined voice command to close the door.

The controller 200 may perform control to open or close the door D by controlling the speaker 80 to output a predetermined voice command to open or close the door.

The door opening/closing device 5 may open or close the door D in response to the predetermined voice command to open or close the door D being received.

According to an embodiment of the disclosure, the robot cleaner 1 may open or close the door D without wireless communication with the door opening/closing device 5.

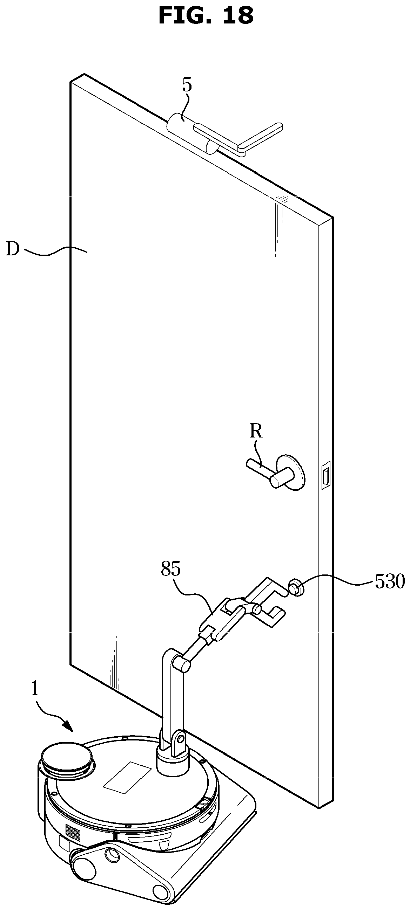

Referring to FIG. 18, the robot cleaner 1 may open or close the door D by controlling the sensor module 530 of the door opening/closing device 5 to detect a predetermined door opening or closing condition.

The sensor module 530 may include a button to detect a tactile input. The button may include various buttons, such as a push button that generates an electric signal based on being pushed and/or a touch button that generates an electric signal based on being touched. In the disclosure, tactile input actions, such as push actions and/or touching actions are collectively called a pressing action.

The door opening/closing device 5 may operate based on the tactile input being received through the sensor module 530.

The tactile input may be the pressing action against a button.

The robot cleaner 1 may have stored information of the door opening/closing device 5, and the information of the door opening/closing device 5 may include information for operating the door opening/closing device 5.

The information for operating the door opening/closing device 5 may include information indicating that, as a way of opening or closing the door, a tactile input is required, and/or location information of a button for tactile inputs.

In an embodiment of the disclosure, the robot cleaner 1 may identify the location of the button based on the information for operating the door opening/closing device 5.

The robot cleaner 1 may perform control to open or close the door D by controlling the robot arm to press the button.

The controller 200 may perform control to open or close the door D by controlling the robot arm to press the button.

The door opening/closing device 5 may close the door D in response to the button being pressed while the door D is open. The door opening/closing device 5 may open the door D in response to the button being pressed while the door D is closed.

When the button includes a door opening button and a door closing button, the door opening/closing device 5 may open the door D in response to the door opening button being pressed, and close the door D in response to the door closing button being pressed.

According to an embodiment of the disclosure, the robot cleaner 1 may open or close the door D without wireless communication with the door opening/closing device 5.

In various embodiments of the disclosure, the door opening/closing device 5 may not be installed on the door D.

When the robot cleaner 1 includes the robot arm 85, it is obvious that the door may be opened by operating such a member as the door handle R without the door opening/closing device 5.

In an embodiment of the disclosure, the controller 200 may control the robot arm 85 to close the door. The controller 200 may control the robot arm 85 to open the door D.

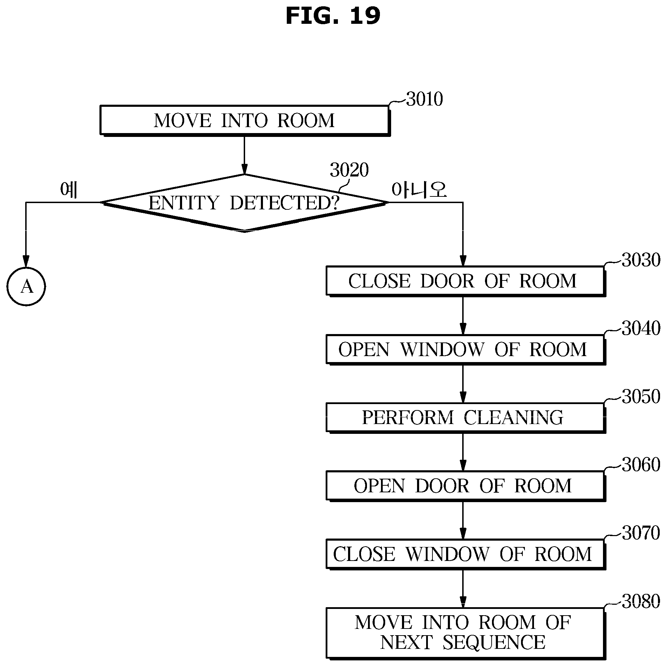

FIG. 19 is a flowchart illustrating operations of a robot cleaner according to an embodiment of the disclosure.

Referring to FIG. 19, the robot cleaner 1 may perform cleaning based on a cleaning schedule. During the cleaning, the robot cleaner 1 may move into a room, in operation 3010. In an embodiment of the disclosure, when a door of the room of the corresponding cleaning sequence is closed, the robot cleaner 1 may open the door of the room to enter the room. For example, the controller 200 may perform control to open the door of the room.

However, when the control authority of the door opening/closing device 5 installed on the door of the room is not allowed by a setting to allow the control authority of the door opening/closing device 5, the robot cleaner 1 may put off or skip the cleaning of the room and move to a room of the next sequence.

The controller 200 may control the driving device 30 to move the robot cleaner 1 into the room. In various embodiments of the disclosure, the controller 200 may control the driving device 30 to move the robot cleaner 1 into a room of the current sequence to clean the room based on the cleaning schedule.

The controlling of the driving device 30 to move the robot cleaner 1 into the room of the current sequence may include controlling the driving device 30 to move the robot cleaner 1 toward the room of the current sequence.

The robot cleaner 1 may detect an entity in the room, in operation 3020. For example, the controller 200 may detect the entity in the room. In various embodiments of the disclosure, the robot cleaner 1 may enter the room and detect an entity in the room, or may detect an entity that is in the room from outside the room.

How to detect an entity in the room included in the cleaning map M may be implemented by various embodiments.

The entity may include animals, such as the user (human being) and/or the user's pet. The entity may not include inanimate entities, such as things. In various embodiments of the disclosure, the entity may not include an animal unrelated to the user (e.g., insects).

In various embodiments of the disclosure, the robot cleaner 1 may detect an entity in a room based on information collected from the sensor module 100. The controller 200 may detect the entity in the room based on information collected from the sensor module 100. For example, the controller 200 may detect an entity in a room based on processing of image data obtained from the camera 110.

For this, the memory 220 may store a trained artificial intelligence (AI) model to identify an entity based on image data.

In various embodiments of the disclosure, the robot cleaner 1 may receive information collected by the home sensor 6 through the communicator 50, and also identify an entity based on the information collected by the home sensor 6.

In various embodiments of the disclosure, the robot cleaner 1 may receive location information of at least one entity in the cleaning map M. For example, the server 3 may identify an entity in cleaning space corresponding to the cleaning map M based on the information collected from the home sensor 6. The server 3 may transmit location information of an entity in the cleaning space corresponding to the cleaning map M to the robot cleaner 1.

Based on a failure to detect an entity in the room in operation 3020, the robot cleaner 1 may perform control to close a door of the room in operation 3030. For example, the controller 200 may perform control to close the door of the room.

A control method to close a door of a room may include the aforementioned various control methods.

In various embodiments of the disclosure, the robot cleaner 1 may move out of a moving range of the door based on the control to close the door of the room being performed. Based on the control to close the door of the room being performed, the controller 200 may control the driving device 30 to move the robot cleaner 1 out of the moving range of the door.

For example, the robot cleaner 1 may move out of the moving range of the door before performing control to close the door of the room. In another example, the robot cleaner 1 may move out of the moving range of the door after performing control to close the door of the room.

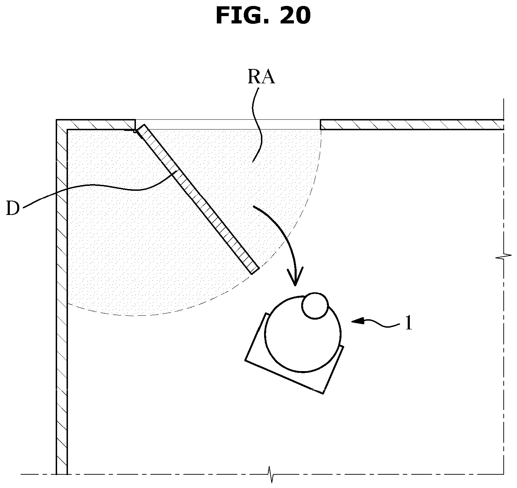

FIG. 20 illustrates a robot cleaner moving out of a moving range of a door to close a door of a room having no entity therein, according to an embodiment of the disclosure.

Referring to FIG. 20, although the door D is illustrated as a hinged door, it is obvious that the embodiment of the disclosure may be equally applied to a case that the door D is a sliding door.

The robot cleaner 1 may identify an area RA corresponding to the moving range of the door D based on information about the door D included in the cleaning map M and/or information collected from the sensor module 100. The controller 200 may identify the area RA corresponding to the moving range of the door D based on the information about the door D included in the cleaning map M and/or information collected from the sensor module 100. The moving range of the door D may include a radius of rotation of the door.

For example, the controller 200 may identify the area RA corresponding to the moving range of the door D based on rotation axis information of the door D and width information of the door D.

In an embodiment of the disclosure, when the robot cleaner 1 does not have to come closer to the door D to operate the door opening/closing device 5 (e.g., when the door opening/closing device 5 is to be operated by wirelessly transmitting the door opening/closing command and/or when the door opening/closing device 5 is to be operated through a voice command), the robot cleaner 1 may move out of the area RA corresponding to the moving range of the door before performing control to close the door D.

In an embodiment of the disclosure, when the robot cleaner 1 needs to approach the door D to operate the door opening/closing device 5 (e.g., when the door opening/closing device 5 is to be operated through a button), the robot cleaner 1 may move out of the area RA corresponding to the moving range of the door after performing control to close the door D.

According to an embodiment of the disclosure, by closing the door of the room before the robot cleaner 1 starts cleaning the room, the noise generated from operation of the cleaning device 40 and delivered to the outside of the door may be reduced.

According to an embodiment of the disclosure, by closing the door of the room before the robot cleaner 1 starts cleaning the room, every corner of the room, such as a blind area behind the door of the room may be cleaned.

In various embodiments of the disclosure, when a window opening/closing device (not shown) is installed on a window of the room, the robot cleaner 1 may open the window of the room based on no entity being detected in the room, in operation 3040. Based on no entity being detected in the room, the controller 200 may perform control to open the window of the room as in the control method of the door opening/closing device 5. The window opening/closing device may be configured with the same components as the door opening/closing device 5.

According to various embodiments of the disclosure, even with a window in the room, the robot cleaner 1 may skip the operation 3040 and simply operate only the door opening/closing device 5.

According to various embodiments of the disclosure, the robot cleaner 1 may skip the operation 3040 based on weather information received from the server 3. For example, the robot cleaner 1 may skip the operation 3040 of opening the window of the room based on more than a predetermined level of fine dust or a forecast of rain being in the weather information received from the server 3.

A method of operating the window opening/closing device may include at least one of the aforementioned methods of operating the door opening/closing device 5, and the description of the door opening/closing device 5 will all be applied to the window opening/closing device.

According to an embodiment of the disclosure, by opening the window of the room before cleaning the inside of the room having no entity therein is started, air ventilation of the room may be performed, thereby increasing user satisfaction.

According to an embodiment of the disclosure, part of the noise generated from operation of the cleaning device 40 may be dispersed out of the window.

The robot cleaner 1 may perform cleaning while the door of the room is closed, in operation 3050. The controller 200 may control the driving device 30 and the cleaning device 40 to clean the room while the door is closed.

The performing of the cleaning while the door of the room is closed may include continuously operating the cleaning device 40 (e.g., the suction device 25) that has been operating before the door of the room is closed, initiating operation of the cleaning device 40 while the door of the room is closed and/or initiating operation of the cleaning device 40 after the door of the room is closed.

In an embodiment of the disclosure, the controller 200 may operate the cleaning device 40 based on the door being closed.

In another embodiment of the disclosure, when the controller 200 has been operating the cleaning device 40 before the door is closed, the controller 200 may increase suction force of the cleaning device 40 (or rotational force of a wet cloth pad for the wet cloth device; the description of the suction force will now be applied to the rotational force) based on the door being closed. For example, the controller 200 may control the suction force of the cleaning device 40 to be first suction force before the door is closed, and control the suction force of the cleaning device 40 to be second suction force larger than the first suction force after the door is closed.

The robot cleaner 1 may perform cleaning while the door of the room is closed, in operation 3050. The controller 200 may control the driving device 30 and the cleaning device 40 to clean the room while the door is closed. The controller 200 may control the driving device 30 and the cleaning device 40 to clean the inside of the room based on a cleaning algorithm stored in the memory 220.

The robot cleaner 1 may complete cleaning based on a cleaning completion condition being satisfied. For example, the robot cleaner 1 may determine that the cleaning completion condition is satisfied when there is no non-cleaned zone in the room, when there is no non-cleaned zone except a non-cleaned zone due to an obstacle in the room, or when a predetermined time has passed.

The robot cleaner 1 may open the door of the room based on cleaning of the room being completed, in operation 3060. The controller 200 may perform control to open the door of the room based on cleaning of the room being completed. A control method to open a door of a room may include the aforementioned various control methods.

In various embodiments of the disclosure, the robot cleaner 1 may move out of a moving range of the door based on the control to open the door of the room being performed. Based on the control to open the door of the room being performed, the controller 200 may control the driving device 30 to move the robot cleaner 1 out of the moving range of the door.

For example, the robot cleaner 1 may move out of the moving range of the door before performing control to open the door of the room. In another example, the robot cleaner 1 may move out of the moving range of the door after performing control to open the door of the room.

The robot cleaner 1 may close a window of the room based on the cleaning of the room being completed, in operation 3070. The controller 200 may perform control to close the window of the room based on cleaning of the room being completed. A control method to close a window of a room may include the aforementioned various control methods.

In various embodiments of the disclosure, the robot cleaner 1 may move into a room of the next sequence through an open door, in operation 3080. The room of the next sequence is determined based on cleaning sequences according to a cleaning schedule. When there is no room of the next sequence, the robot cleaner 1 may return to a docking station.

According to an embodiment of the disclosure, when the robot cleaner 1 performs cleaning of a room, the cleaning is performed after closing the door of the room, thereby preventing the noise from being heard well outside the room and thus, reducing inconvenience of the user located outside the room.

According to an embodiment of the disclosure, when the robot cleaner 1 cleans the room, the cleaning is performed with the window of the room open, so the room may be ventilated well during the cleaning and part of the noise may be dispersed out of the window.

In various embodiments of the disclosure, it is obvious that some of the operations shown in FIG. 19 may be omitted or some operations may be added thereto. For example, when the window opening/closing device is not installed on the window of the room, the operations 3040 and 3070 may be omitted. In another example, when the door opening/closing device 5 is not installed on the door of the room, the operations 3030 and 3060 may be omitted.

In various embodiments of the disclosure, when the robot cleaner 1 moves into a room of the next sequence through an open door, the robot cleaner 1 may re-close or open the door and/or the window depending on an open or closed state of the door and/or window before cleaning the room.

For example, when the robot cleaner 1 opens the door that has been closed during the operation 3010 of moving into the room, the robot cleaner 1 may complete cleaning and then close the door again during the operation 3080 of moving into a room of the next sequence.

In another example, the robot cleaner 1 may skip the operation 3070 when the window of the room has already been open.

According to various embodiments of the disclosure, the robot cleaner 1 may perform the operation 3070 even though the window of the room has already been open, based on weather information received from the server 3.

For example, the robot cleaner 1 may perform the operation 3070 of closing the window of the room based on more than a predetermined level of fine dust or a forecast of rain being in the weather information received from the server 3.

The robot cleaner 1 may move into a room of the next sequence through the operation 3080 of moving into the room of the next sequence, in operation 3010.

In various embodiments of the disclosure, the operations as described with reference to FIG. 19 may be performed by a control command of the server 3 or performed by a combination of the robot cleaner 1 and the server 3. For example, the aforementioned cleaning operations may be performed by the robot cleaner 1 in a method of transmitting a control command to the robot cleaner 1 from the server 3.

In various embodiments of the disclosure, the door opening/closing device 5 and/or the window opening/closing device may be controlled according to a control command of the robot cleaner 1 or the server 3.

For example, the server 3 may receive location information of the robot cleaner 1 from the robot cleaner 1. Based on the robot cleaner 1 entering a room having no entity therein in operation 3020, the server 3 may transmit a door closing command to the door opening/closing device 5 through the communicator 340 in operation 3030.

Based on the robot cleaner 1 entering the room having no entity therein in operation 3020, the server 3 may transmit a window closing command to the window opening/closing device through the communicator 340.

Based on the robot cleaner 1 entering a room having an entity therein, the server 3 may transmit a control command to turn off the cleaning device 40 or reduce suction force of the cleaning device 40 to the robot cleaner 1 through the communicator 340.

Based on completion of cleaning the room by the robot cleaner 1, the server 3 may transmit a door opening command to the door opening/closing device 5 through the communicator 340 in operation 3060.

Based on completion of cleaning the room by the robot cleaner 1, the server 3 may transmit a window opening command to the window opening/closing device through the communicator 340 in operation 3070.

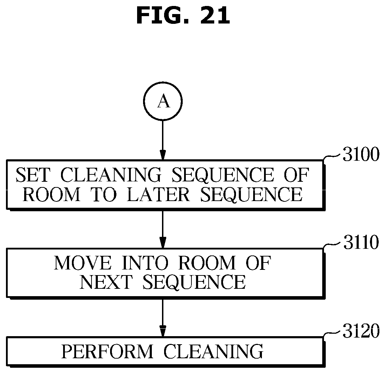

FIG. 21 is a flowchart illustrating operations when a robot cleaner enters a room having an entity therein according to an embodiment of the disclosure.

Referring to FIG. 21, based on an entity being identified in the room in operation 3020 of FIG. 19, the robot cleaner 1 may set the cleaning sequence of the room to a later sequence in operation 3100.

For example, when an entity is identified in the room, the robot cleaner 1 may be configured to set the cleaning sequence of the room to a later sequence regardless of an intent of the entity. The setting of the cleaning sequence of the room to a later sequence may include setting the cleaning sequence of the room to the last sequence and/or changing the cleaning sequence of the room to the next sequence.

In various embodiments of the disclosure, when the cleaning sequence of the room corresponds to the last sequence, the setting of the cleaning sequence of the room to a later sequence may include skipping the cleaning of the room.

Based on an entity being identified in the room in operation 3020 of FIG. 19, the robot cleaner 1 may turn off the cleaning device 40 or reduce the suction force of the cleaning device 40.

Based on an entity being detected in the room, the controller 200 may set the cleaning sequence of the room to a later sequence. In this case, the changed cleaning sequence of the room may not be reflected in the schedule information. In other words, the cleaning sequence of the room may be changed only for the current cleaning cycle.

Based on an entity being identified in the room in operation 3020 of FIG. 19, the robot cleaner 1 may turn off the cleaning device 40 or reduce the suction force of the cleaning device 40. According to an embodiment of the disclosure, the noise delivered to the entity in the room may be minimized.

In various embodiments of the disclosure, based on an entity being identified in the room in operation 3020 of FIG. 19, the robot cleaner 1 may not do the cleaning for the room but may move to a room of the next sequence in operation 3110. The controller 200 may control the driving device 30 to move the robot cleaner 1 out of the room The controller 200 may control the driving device 30 to move the robot cleaner 1 to a room of the next sequence.

In various embodiments of the disclosure, based on an entity being identified in the room in operation 3020 of FIG. 19, the robot cleaner 1 may move out of the room and close the door of the room. The controller 200 may perform control to close the door based on the robot cleaner 1 moving out of the room.

According to an embodiment of the disclosure, when there is an entity in the room, the door of the room may be closed to prevent the noise generated from performing cleaning outside the room from being delivered into the room.

In various embodiments of the disclosure, the robot cleaner 1 may perform cleaning of the next room when no entity is identified in the room of the next sequence, in operation 3120. The controller 200 may control the driving device 30 and the cleaning device 40 to clean the next room when no entity is identified in the room of the next sequence. The controller 200 may perform control to close the door of the room of the next sequence and/or open the window before cleaning the room of the next sequence.

Specifically, based on an entity being detected in a first room, the controller 200 may control the driving device 30 to move the robot cleaner 1 into a second room next to the first room in sequence, and based on no entity being detected in the second room, the controller 200 may perform control to close the door of the second room.

In various embodiments of the disclosure, when there is a history of detecting an entity in a room of a previous sequence, the robot cleaner 1 may operate the cleaning device 40 in a low-noise mode to clean a room corresponding to the next sequence. In other words, to perform a cleaning cycle according to a cleaning schedule, the robot cleaner 1 may operate in the low-noise mode when there is a history of detecting an entity in operation 3020 while operation is being performed according to the flowchart of FIG. 19.

Specifically, in a case of do the cleaning for the second room of the next sequence after an entity is detected in the first room, the controller 200 may control the suction force of the cleaning device 40 to be first suction force, and in a case of cleaning the second room after the cleaning of the first room is completed based on no entity being detected in the first room, the controller 200 may control the suction force of the cleaning device 40 to be second suction force, and the first suction force may be weaker than the second suction force.

According to an embodiment of the disclosure, the robot cleaner 1 operates in the low-noise mode based on suction force weaker than preset suction force even when an entity exists in another room, thereby minimizing a disturbance to the entity in the other room.

The aforementioned embodiment is merely one embodiment of the disclosure, but in various embodiments of the disclosure, the robot cleaner 1 may operate in the same mode in each room regardless of a history of detecting an entity in a room of the previous sequence.

In various embodiments of the disclosure, the robot cleaner 1 may operate in the low-noise mode based on a distance between a room where an entity exists and a room where no entity exists regardless of the history of detecting an entity in the room of the previous sequence. For example, in a case of performing cleaning of the second room located within a predetermined distance to the first room after an entity is detected in the first room, the controller 200 may control the suction force of the cleaning device 40 to be weaker than to perform cleaning of the second room after no entity is detected in the first room. In another example, in the case of performing cleaning of the second room located within the predetermined distance to the first room after an entity is detected in the first room, the controller 200 may control the suction force of the cleaning device 40 to be weaker than to perform cleaning of a third room located farther than the predetermined distance to the first room after an entity is detected in the first room.

According to an embodiment of the disclosure, when there is an entity in a room, a disturbance to the entity may be minimized.

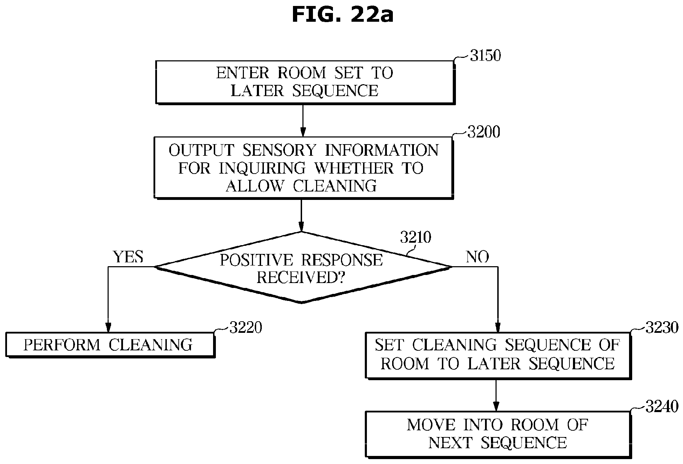

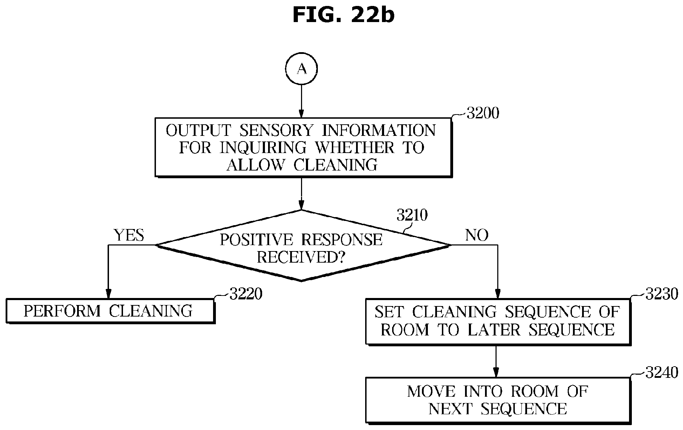

FIGS. 22A and 22B are flowcharts illustrating operations when a robot cleaner enters a room having an entity therein according to various embodiments of the disclosure.

In various embodiments of the disclosure, operations shown in FIG. 22A may be performed by the robot cleaner 1 and/or the server 3 when the robot cleaner 1 enters a room in operation 3150 whose cleaning sequence is set to a later sequence in the operation 3100 of FIG. 21.

In other words, when entering a room having a history of setting the cleaning sequence to a later sequence in the cleaning cycle, the robot cleaner 1 and/or the server 3 may perform the operations shown in FIG. 22A.

According to an embodiment of the disclosure, when the robot cleaner 1 already reenters the room having the history of setting the cleaning sequence to a later sequence, the entity's intent may be clearly confirmed regarding whether to skip cleaning of the room. Accordingly, in an embodiment of the disclosure, the satisfaction of an entity et who wants to perform cleaning of the room regardless of noise may increase.

Embodiments are not, however, limited thereto. For example, the operations shown in FIG. 22B may be performed by the robot cleaner 1 and/or the server 3 even when the robot cleaner 1 enters the room for the first time.

In an embodiment of the disclosure, based on an entity being detected in the room in operation 3020 of FIG. 19, the robot cleaner 1 may output sensory information for inquiring whether to allow cleaning of the room in operation 3200. For example, based on an entity being detected in the room in operation 3020 of FIG. 19, the controller 200 may control the user interface 60 to output the sensory information for inquiring whether to allow cleaning of the room.

The controlling of the user interface 60 to output the sensory information may include controlling the speaker 80 to output audible information and/or controlling a display to output visual information.

According to an embodiment of the disclosure, even when an entity exists in the room, whether to perform cleaning of the room may be determined according to the entity's intent.

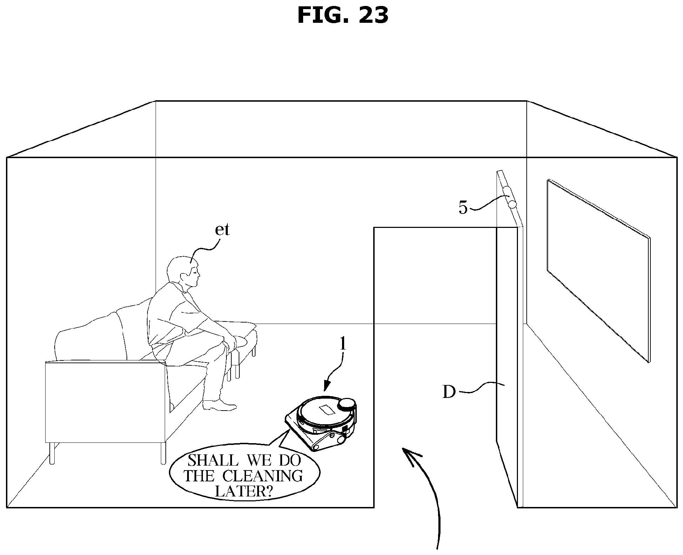

FIG. 23 illustrates a robot cleaner outputs sensory information for inquiring whether to allow cleaning according to an embodiment of the disclosure.

Referring to FIG. 23, the robot cleaner 1 may output audible information (e.g., voice) for inquiring whether to allow cleaning of the room through the speaker 80 based on an entity et being detected in the room.

The audible information may include, for example, a predetermined voice. The predetermined voice may be generated through a TTS module. A predetermined text for inquiring whether to allow cleaning of the room, such as "shall we do the cleaning later?" may be converted by the TTS module into a predetermined voice.

The entity et that hears the predetermined voice output from the robot cleaner 1 may answer to the inquiry.

Turning back to FIGS. 22A and 22B, based on a positive response being received from the entity et in operation 3210, the robot cleaner 1 may perform cleaning of the room in operation 3220.

The robot cleaner 1 may confirm the user's intent through the input interface 61 (e.g., the microphone 70). The controller 200 may perform cleaning of the room based on the positive response being received through the user interface 60.

For example, the controller 200 may control the cleaning device 40 and the driving device 30 to perform cleaning of the room based on a voice signal corresponding to the positive response being received through the microphone 70.

The positive response may refer to a voice, such as "yes", "OK", or the like, but is not limited thereto, and may include choosing a positive word, such as "yes", "OK", or the like.

A text and/or word corresponding to the positive response may be stored in the memory 220.

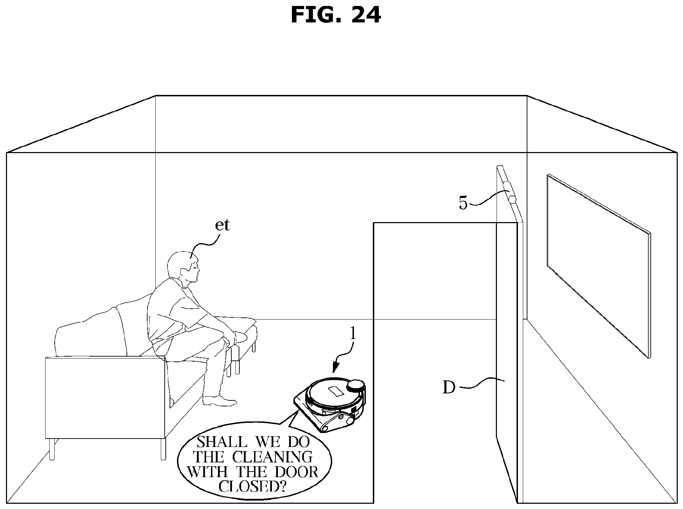

FIG. 24 illustrates a robot cleaner outputting sensory information for inquiring a cleaning condition according to an embodiment of the disclosure.

Referring to FIG. 24, to perform cleaning of the room having the entity et therein in operation 3220, the robot cleaner 1 may output sensory information for inquiring the user's intent related to a cleaning mode setting. To perform cleaning in a room having the entity et therein, the controller 200 may control the user interface 60 to output the sensory information for inquiring the user's intent related to the cleaning mode setting.

For example, to perform cleaning in a room having the entity et therein, the robot cleaner 1 may output audible information (e.g., a voice) for inquiring the user's intent related to the cleaning mode setting through the speaker 80.

The cleaning mode setting may include a door opening/closing setting and/or a low-noise mode operation setting.

The robot cleaner 1 may confirm the user's intent related to opening or closing of the door through the user interface 60 (e.g., the microphone 70).

The sensory information for confirming an intent to open or close the door may include a predetermined voice. The predetermined voice may be generated through a TTS module. A predetermined text for inquiring whether to close the door, such as "shall we do the cleaning after closing the door?" may be converted by the TTS module into a predetermined voice.

The robot cleaner 1 may confirm the user's intent related to a low-noise mode setting through the user interface 60 (e.g., the microphone 70).

The sensory information for confirming an intent to set a low-noise mode may include, for example, a predetermined voice. The predetermined voice may be generated through a TTS module. A predetermined text for inquiring whether to set the low-noise mode, such as "shall we do the cleaning in the low-noise mode?" may be converted by the TTS module into a predetermined voice.

In various embodiments of the disclosure, based on a command being received from the entity, the robot cleaner 1 may perform an operation corresponding to the command.

For example, based on a positive response to the sensory information output to inquire an intent to close the door being received, the robot cleaner 1 may perform control to close the door.

In another example, based on a positive response to the sensory information output to inquire an intent to set the low-noise mode being received, the robot cleaner 1 may be operated in the low-noise mode.

Turning back to FIGS. 22A and 22B, in various embodiments of the disclosure, based on a negative response being received from the entity et in operation 3210, the robot cleaner 1 may not perform cleaning of the room. The controller 200 may control the cleaning device 40 and the driving device 30 not to perform cleaning of the room based on the negative response being received through the user interface 60. The negative response may be an answer that does not allow cleaning.

For example, the controller 200 may control the cleaning device 40 and the driving device 30 not to perform cleaning of the room based on a voice signal corresponding to the negative response being received through the microphone 70.

The negative response may refer to a voice, such as "no", "I won't", or the like, but is not limited thereto, and may include choosing a negative word, such as "no", "I won't", or the like.

A text and/or word corresponding to the negative response may be stored in the memory 220.

In an embodiment of the disclosure, based on the negative response being received from the entity et in operation 3210, the robot cleaner 1 may set the cleaning sequence of the room to a later sequence in operation 3230.

In an embodiment of the disclosure, based on the negative response being received from the entity et in operation 3210, the robot cleaner 1 may move into a room of the next sequence in operation 3240.

In various embodiments of the disclosure, the robot cleaner 1 may receive the negative response from the entity et, and when the cleaning sequence of the room corresponds to the last sequence, the robot cleaner 1 may skip cleaning of the room and end the cleaning cycle. In an embodiment of the disclosure, the controller 200 may receive the negative response when the cleaning sequence of the room corresponds to the last sequence, and the controller 200 may control the driving device 30 for the robot cleaner 1 to return to a docking station when the cleaning sequence of the room corresponds to the last sequence.

When there is a history of setting the sequence of the room to a later sequence in the cleaning cycle, the robot cleaner 1 may skip cleaning of the room in response to the negative response being received from the entity et.

According to an embodiment of the disclosure, when there is an entity in a room having a history of being set to a later sequence or a room corresponding to the last sequence, the cleaning cycle may be finished or cleaning of the room may be performed after the entity's intent is confirmed.

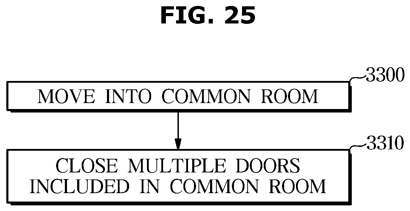

FIG. 25 is a flowchart illustrating operations of a robot cleaner which is cleaning a common room according to an embodiment of the disclosure.

Referring to FIG. 25, the robot cleaner 1 may move into a common room, in operation 3300. For example, the controller 200 may control the driving device 30 to move the robot cleaner 1 into the common room according to a cleaning schedule. Specifically, the controller 200 may control the driving device 30 to move the robot cleaner 1 into the common room including the first door of the first room and the second door of the second room.

As described above, the common room may refer to a room including a plurality of doors or a room partitioned by a plurality of doors. For example, the common room may include a living room, a corridor and/or a kitchen, but any space that includes a plurality of doors or that is partitioned by a plurality of doors may be the common room without limitation.

Each of the plurality of doors included in the common room may be shared by another room.

For example, in the cleaning map shown in FIG. 7, the fourth room Room 4 may be the common room. Each of the plurality of doors D1, D2, D3 and D5 included in the fourth room Room4 may be the door D1 corresponding to the first room Room1, the door D2 corresponding to the second room Room2, the door D3 corresponding to the third room Room3 and the door D5 corresponding to the fifth room Room5.

When the robot cleaner 1 performs cleaning in the common room, noise generated from the robot cleaner 1 may be delivered to all the rooms connected to the common room.

In various embodiments of the disclosure, the robot cleaner 1 may be configured to operate in a low-noise mode in cleaning the common room. However, when it is operating in the low-noise mode, the cleaning efficiency becomes low, so it may not be desirable that the robot cleaner 1 always operates in the low-noise mode to clean the common room.

In an embodiment of the disclosure, in operation 3310, the robot cleaner 1 may perform control to close the plurality of doors included in the common room based on cleaning of the common room.

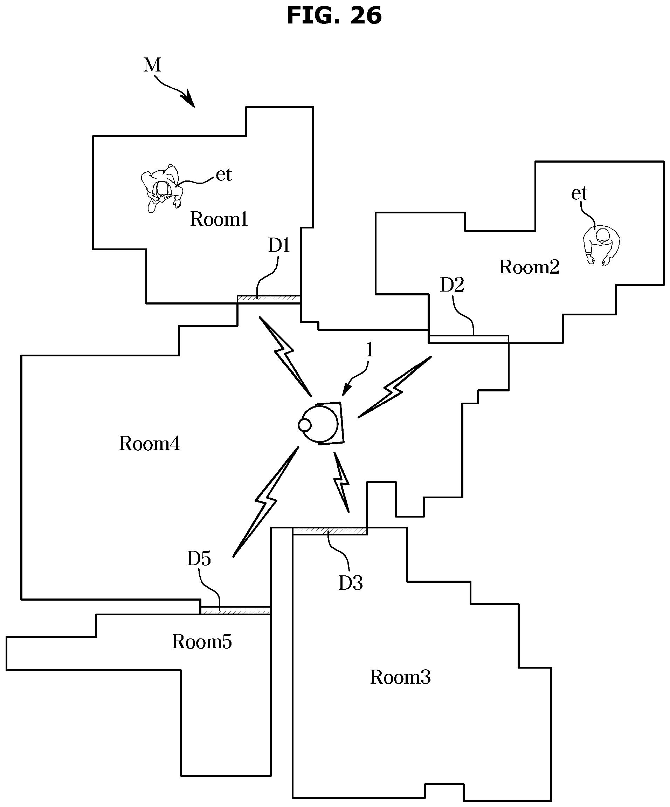

FIG. 26 illustrates all doors included in a common room being closed according to an embodiment of the disclosure.

Referring to FIG. 26, to clean the common room, the robot cleaner 1 may perform control to close all the plurality of doors regardless of whether there is an entity in each of the plurality of rooms. The controller 200 may perform control to close the plurality of doors connected to the common room based on cleaning of the common room.

The robot cleaner 1 may perform control to open the plurality of doors based on completion of the cleaning of the common room. In various embodiments of the disclosure, the robot cleaner 1 may keep a door that has already been closed before performing control to close the plurality of doors closed even after the cleaning of the common room is completed.

According to an embodiment of the disclosure, when the robot cleaner 1 is cleaning the common room, noise delivered to an entity in a room other than the common room may be minimized.

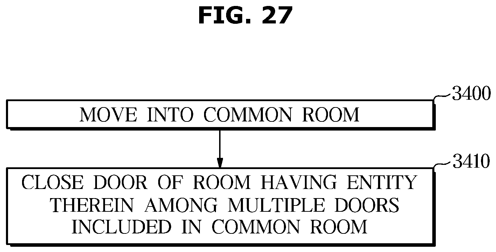

FIG. 27 is a flowchart illustrating operations when a robot cleaner cleans a common room according to an embodiment of the disclosure.

Referring to FIG. 27, the robot cleaner 1 may move into the common room, in operation 3400. For example, the controller 200 may control the driving device 30 to move the robot cleaner 1 into the common room according to a cleaning schedule. Specifically, the controller 200 may control the driving device 30 to move the robot cleaner 1 into the common room including the first door of the first room and the second door of the second room.

When the robot cleaner 1 performs cleaning in the common room, noise generated from the robot cleaner 1 may be delivered to all the rooms connected to the common room.

In an embodiment of the disclosure, in operation 3410, the robot cleaner 1 may perform control to close a door of a room having an entity therein among the plurality of doors included in the common room based on the cleaning of the common room.

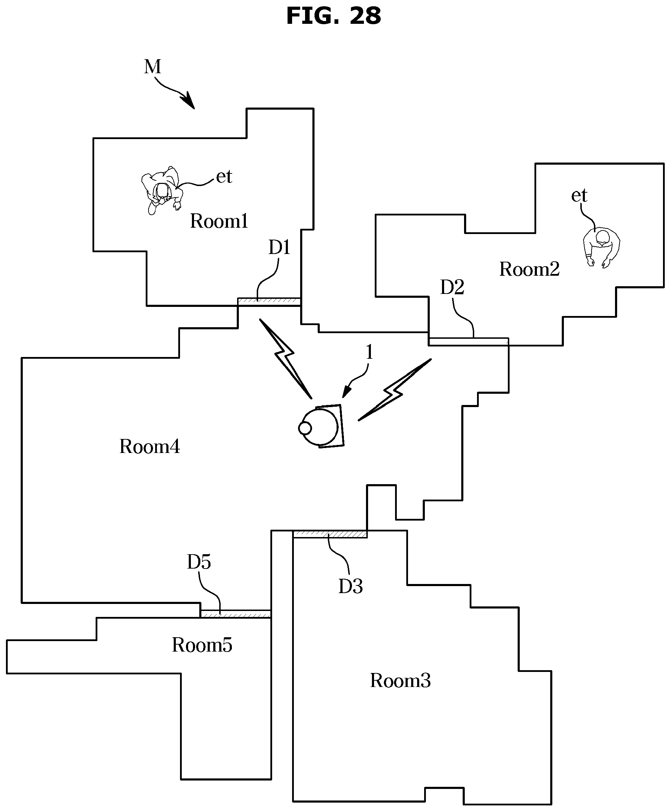

FIG. 28 illustrates a door that satisfies a predetermined condition closed among a plurality of doors included in a common room according to an embodiment of the disclosure.

Referring to FIG. 28, the controller 200 may close only a door of a room having an entity therein when the robot cleaner 1 cleans the common room.

For example, the controller 200 may perform control to close the first door D1 based on an entity being detected in the first room Room 1, and perform control to close the second door D2 based on an entity being detected in the second room Room 2. The controller 200 may not perform control to close the third and fifth doors D3 and D5 based on no entity being detected in the third or fifth room Room 3 or Room 5.

According to an embodiment of the disclosure, in a case of cleaning the common room, by closing only a door of a room having an entity therein, time taken to close the plurality of doors may be saved as well as the noise delivered to the entity may be minimized.

In various embodiments of the disclosure, the operations as described with reference to FIGS. 21, 22A, 22B, 25, and/or 27 may be performed by the server 3 or performed by a combination of the robot cleaner 1 and the server 3. For example, the aforementioned operations may be performed by the server 3 in a method of transmitting a control command to the robot cleaner 1 from the server 3.

For example, based on the robot cleaner 1 entering a room having an entity therein, the server 3 may transmit a control command to set the cleaning sequence of the room to a later sequence to the robot cleaner 1 through the communicator 340, in operation 3100.

Based on the robot cleaner 1 moving out of the room to move to the next cleaning sequence, the server 3 may transmit the door closing command to the door opening/closing device 5 through the communicator 340.

Based on the robot cleaner 1 entering a room having an entity therein, the server 3 may transmit a control command to turn off the cleaning device 40 or reduce suction force of the cleaning device 40 to the robot cleaner 1 through the communicator 340.

Based on the robot cleaner 1 entering a room having an entity therein, the server 3 may transmit a control command to output sensory information for inquiring whether to change the cleaning sequence of the room to the robot cleaner 1 through the communicator 340 in operation 3200.

Based on the positive response being received from the entity et in operation 3210, the server 3 may transmit a control command to perform cleaning of the room to the robot cleaner 1 through the communicator 340 in operation 3220.

Based on the negative response being received from the entity et in operation 3210, the server 3 may transmit a control command to set the cleaning sequence of the room to a later sequence to the robot cleaner 1 through the communicator 340 in operation 3230.

Based on the negative response being received from the entity et in operation 3210, the server 3 may transmit a control command to move the robot cleaner 1 to a room of the next sequence to the robot cleaner 1 through the communicator 340 in operation 3240.

Based on the robot cleaner 1 cleaning the common room, the server 3 may transmit the door closing command to a plurality of door closing devices to close the plurality of doors included in the common room through the communicator 340 in operation 3310.

Based on the robot cleaner 1 cleaning the common room, the server 3 may transmit the door closing command to a door closing device to close a door of a room having an entity therein among the plurality of doors included in the common room through the communicator 340 in 3410.

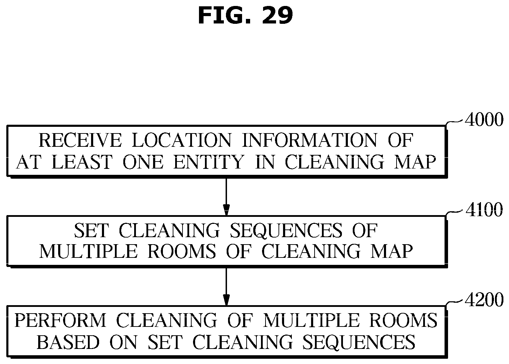

FIG. 29 is a flowchart illustrating a robot cleaner sets cleaning sequences based on location information of an entity according to an embodiment of the disclosure.

Referring to FIG. 29, in various embodiments of the disclosure, the robot cleaner 1 may identify whether there is an entity in the room based on information collected from the sensor module 100. However, to identify whether there is an entity in the plurality of rooms, the robot cleaner 2 needs to enter each of the plurality of rooms.

In an embodiment of the disclosure, the home sensor 6 may obtain location information of at least one entity in a space corresponding to the cleaning map M. In other words, the home sensor 6 may obtain location information of at least one entity in the cleaning map M.

In various embodiments of the disclosure, the home sensor 6 may include a plurality of wireless communication anchors, and identify a location of the user device 2 based on a wireless signal output from a wireless communication tag included in the user device 2 of the user. The location of the user device 2 may be estimated as the entity's location and transmitted to the robot cleaner 1 as location information of the entity.

The robot cleaner 1 may receive location information of at least one entity in the cleaning map M from the home sensor 6 directly or via the server 3, in operation 4000.

The home sensor 6 may send information about the space corresponding to the cleaning map M to an external device (e.g., the robot cleaner 1, the user device 2, or the server 3). For this, the home sensor 6 may include at least one sensor for obtaining the location information of the at least one entity in the cleaning map M, a communicator for sending the information to the external device, and a controller for controlling the components of the home sensor 6.

The robot cleaner 1 does not have to enter a room having an entity therein as long as the robot cleaner 1 recognizes the location of the entity in the cleaning map M before entering the room in the cleaning map M.

In various embodiments of the disclosure, the robot cleaner 1 may control suction force of the cleaning device 40 based on a distance between the robot cleaner 1 and the entity. For example, the controller 200 may control the suction force of the cleaning device 40 to be first suction force when the distance between the robot cleaner 1 and the at least one entity is a first distance, and control the suction force of the cleaning device 40 to be second suction force when the distance between the robot cleaner 1 and the at least one entity is a second distance, wherein the first distance may be shorter than the second distance and the first suction force may be weaker than the second suction force.

As described above, the robot cleaner 1 performs cleaning of the plurality of rooms of the cleaning map M based on cleaning sequences according to a preset cleaning schedule. For example, the robot cleaner 1 is configured to clean the plurality of rooms according to preset cleaning sequences.

In an embodiment of the disclosure, the robot cleaner 1 may set cleaning sequences of the plurality of rooms of the cleaning map M based on the location information of the at least one entity in the cleaning map M, in operation 4100.

In various embodiments of the disclosure, the robot cleaner 1 may set the cleaning sequences of the plurality of rooms of the cleaning map M by changing the preset cleaning sequences.

For example, the robot cleaner 1 may change the preset cleaning sequences according to whether there is an entity in the plurality of rooms.

In an embodiment of the disclosure, the controller 200 may perform cleaning of the plurality of rooms according to the preset cleaning sequences, and set the cleaning sequence of the first room to a later sequence based on the entity being located in the first room of the plurality of rooms.

In various embodiments of the disclosure, the controller 200 may set the cleaning sequences of the first and second rooms to later sequences based on the entities being located in the first and second rooms of the plurality of rooms. When the cleaning sequences of the first and second rooms to later sequences, priorities between the first room and the second room may depend on the preset cleaning sequences.

For example, when the first room is set to have the first sequence and the second room is set to have the second sequence later than the first sequence according to the preset cleaning sequences, the controller 200 may set the cleaning sequences of the first and second rooms to later sequences in which case, the sequence of the first room is earlier than the sequence of the second room.

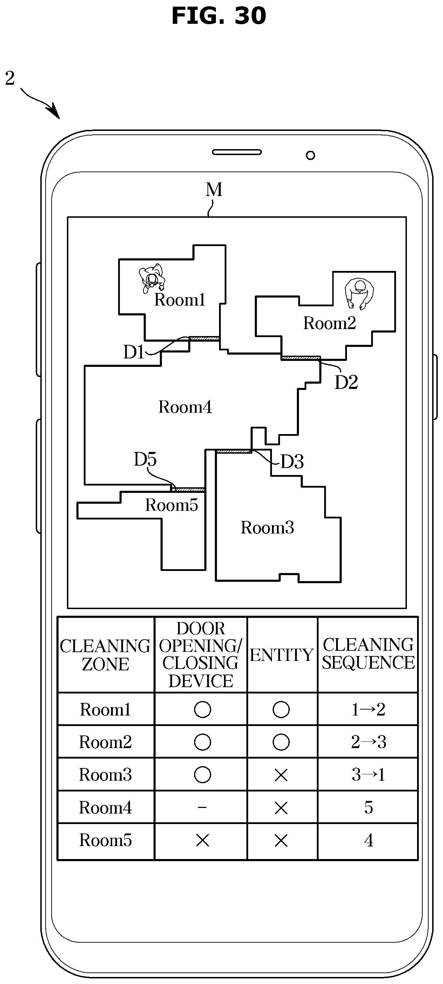

FIG. 30 illustrates cleaning sequences being set according to an embodiment of the disclosure.

Referring to FIG. 30, it is seen that entities are located in the first room Room 1 and the second room Room 2 of the cleaning map M.

The robot cleaner 1 may clean a room having no entity therein first and then clean a room having an entity therein according to a cleaning schedule.

According to the preset cleaning schedule, the first room Room 1, second room Room 2, third room Room 3, fifth room Room 5 and fourth room Room 4 has first, second, third, fourth and fifth sequences, respectively, but as there are entities located in the first room Room 1 and the second room Room 2, cleaning sequences of the third room Room 3 and the first room Room 1 may be changed to second and third.

In an embodiment of the disclosure, the controller 200 may change the preset cleaning sequence of a room having an entity therein to be later than the cleaning sequence of at least one room having no entity therein.

Specifically, when the cleaning map M includes the first room Room 1 corresponding to the first cleaning sequence, the second room Room 2 corresponding to the second cleaning sequence that is later than the first cleaning sequence, and the third room Room 3 corresponding to the third cleaning sequence that is later than the second cleaning sequence, in an embodiment of the disclosure, the controller 200 may change the cleaning sequence of the third room Room 3 to the first cleaning sequence, change the cleaning sequence of the first room Room 1 to the second cleaning sequence and change the cleaning sequence of the second room Room 2 to the third cleaning sequence based on the entities being located in the first room Room 1 and the second room Room 2.

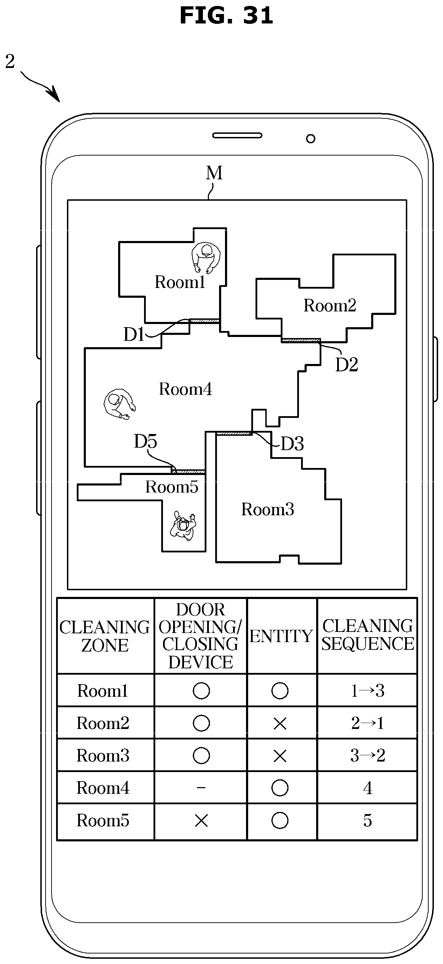

FIG. 31 illustrates cleaning sequences being set according to an embodiment of the disclosure.

Referring to FIG. 31, it is seen that entities are located in the first room Room 1, the fourth room Room 4 and the fifth room Room 5.

The robot cleaner 1 may give priority to a room having no entity therein, clean the room with no entity therein, and then clean rooms having entities therein according to cleaning sequences.

In an embodiment of the disclosure, the controller 200 may change the preset cleaning sequence of a room having an entity therein to be later than the cleaning sequences of all rooms having no entity therein.

Specifically, when the cleaning map M includes the first room Room 1 corresponding to the first cleaning sequence, the second room Room 2 corresponding to the second cleaning sequence that is later than the first cleaning sequence, and the third room Room 3 corresponding to the third cleaning sequence that is later than the second cleaning sequence, in an embodiment of the disclosure, the controller 200 may change the cleaning sequence of the second room Room 2 to the first cleaning sequence, change the cleaning sequence of the third room Room 3 to the second cleaning sequence and change the cleaning sequence of the first room Room 1 to the third cleaning sequence based on an entity being located in the first room Room 1.

According to an embodiment of the disclosure, by changing the cleaning sequence of a room having an entity therein among the plurality of rooms to be a later sequence, time may be secured until the entity gets out of the room.

Turning back to FIG. 29, based on cleaning sequences of the plurality of rooms of the cleaning map M set based on location information of an entity, the robot cleaner 1 may perform cleaning of the plurality of rooms, in operation 4200.

In various embodiments of the disclosure, to perform cleaning of a room having no entity therein, the robot cleaner 1 may perform at least one operation 3030, 3040, 3050, 3060, 3070 and/or 3080 as described in FIG. 19.

For example, when entering a room having no entity therein based on the location information of at least one entity in the cleaning map M obtained from the home sensor 6, the robot cleaner 1 may perform cleaning of the room after performing control to close the door of the room.

It is obvious that at least one operation as described in FIG. 29 may be performed by the server 3.

For example, the server 3 may receive location information of at least one entity in the cleaning map M from the home sensor 6, in operation 4000.

The server 3 may set cleaning sequences of the plurality of rooms of the cleaning map M based on the location information of the at least one entity in the cleaning map M, in operation 4100.

The server 3 may send information about the cleaning sequences of the plurality of rooms to the robot cleaner 1 through the communicator 340.

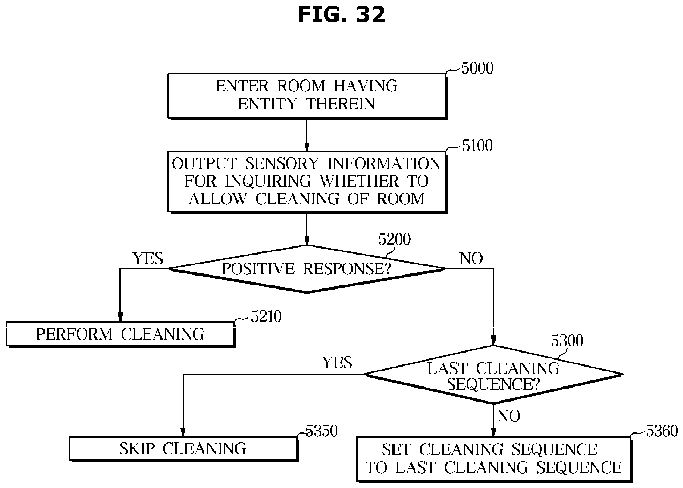

FIG. 32 is a flowchart illustrating operations after a robot cleaner enters a room having an entity therein according to an embodiment of the disclosure.

To perform cleaning of a room having an entity therein even though putting off the cleaning sequence of the room having the entity therein until later, the robot cleaner 1 needs to enter the room having the entity therein.

Referring to FIG. 32, the robot cleaner 1 may enter the room having an entity therein according to a set cleaning sequence, in operation 5000. The controller 200 may control the driving device 30 to move the robot cleaner 1 to the room having the entity therein.

The robot cleaner 1 may output sensory information for inquiring whether to allow cleaning of the room having the entity therein based on entering the room, in operation 5100. The operation 5100 of outputting the sensory information for inquiring whether to allow cleaning of the room may correspond to the operation 3200 as described in FIGS. 22A and 22B.

Based on a positive response being received in operation 5200, the robot cleaner 1 may perform cleaning in operation 5210. The operation 5210 of performing cleaning based on the positive response being received in operation 5200 may correspond to the operation 3220 as described in FIGS. 22A and 22B.

The robot cleaner 1 may change the cleaning sequence of the room to the last cleaning sequence based on a negative response being received in operation 5200. However, as the cleaning sequence of the room having an entity therein is already set to one later than the cleaning sequence of a room having no entity therein, it is more likely that the cleaning sequence of the former room corresponds to the last cleaning sequence.

In an embodiment of the disclosure, the robot cleaner 1 may receive the negative response in operation 5200, and based on the fact that the cleaning sequence of the room is the last cleaning sequence in operation 5300, the robot cleaner 1 may skip cleaning of the room in operation 5350. The skipping of the cleaning of the room may include ending the cleaning cycle and returning to a docking station.

In an embodiment of the disclosure, the robot cleaner 1 may receive the negative response in 5200, and based on the fact that the cleaning sequence of the room is not the last cleaning sequence in operation 5300, the robot cleaner 1 may set the cleaning sequence of the room to the last cleaning sequence in operation 5360.

In various embodiments of the disclosure, it is obvious that some of the operations as described above with reference to FIGS. 19, 21, 22A, 22B, 25, 27, 29 and/or 32 may be omitted or altered. For example, in an embodiment of the disclosure, based on the negative response being received in operation 5200 regardless of whether the cleaning sequence of the room is the last cleaning sequence, the robot cleaner 1 may skip cleaning in operation 5350.

In an embodiment of the disclosure, the robot cleaner 1 may perform cleaning of the room based on the entity having disappeared from the room for which cleaning is skipped. For example, the robot cleaner 1 returns to the docking station and stand by, and based on disappearance of the entity in the room for which cleaning is skipped being recognized through the information obtained from the home sensor 6, the robot cleaner 1 may perform cleaning of the room. In this case, the cleaning of the room for which cleaning has been skipped may be performed regardless of the cleaning schedule.

According to an embodiment of the disclosure, by obtaining, in advance, location information of an entity in each of the plurality of rooms of the cleaning map M through the home sensor 6 and changing the cleaning sequences according to the location information of the entity, noise transmission to the entity may be minimized.

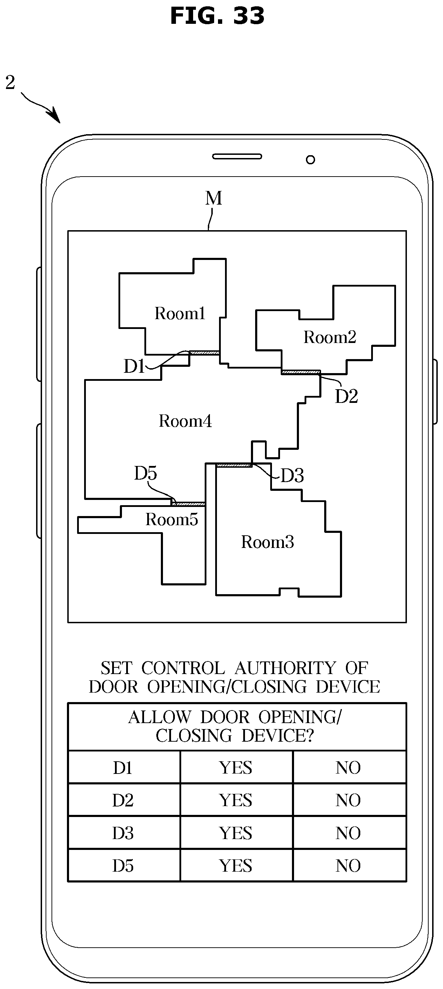

FIG. 33 illustrates an interface for setting inhibition of operation of a door opening/closing device according to an embodiment of the disclosure.

Referring to FIG. 33, the user device 2 may provide an interface for setting a control authority of the door opening/closing device 5. In various embodiments of the disclosure, it is obvious that the user interface for setting the control authority of the door opening/closing device 5 may be provided through the user interface 60 of the robot cleaner 1.

The setting of the control authority of the door opening/closing device 5 may include a setting for allowing the control authority of the door opening/closing device 5 corresponding to each of the plurality of rooms.

The interface for setting the control authority of the door opening/closing device 5 may include an element for selecting identification information (e.g., name, location on the cleaning map M, or the like) of each of the plurality of doors, and an element for allowing control authority of the door opening/closing device 5 installed on the selected door.

The user may pass the control authority of the door opening/closing device 5 to the robot cleaner 1 and/or the server 3 by selecting the element for allowing the control authority of the door opening/closing device 5.

When the control authority of the door opening/closing device 5 is allowed by the user, the robot cleaner 1 and/or the server 3 is able to control the door opening/closing device 5 even without an input from the user.

When the control authority of the door opening/closing device 5 is not allowed, the robot cleaner 1 and/or the server 3 is unable to control the door opening/closing device 5.

According to an embodiment of the disclosure, by allowing or disallowing the control authority of the door opening/closing device 5 for the robot cleaner 1 and/or the server 3, the door opening/closing device 5 may be prevented from automatically operating without the intervention of the user.

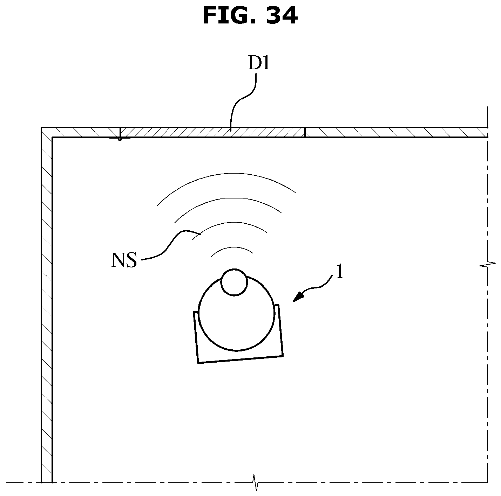

FIG. 34 is a diagram illustrating a direction of a noise canceling sound output by a robot cleaner according to an embodiment of the disclosure.

Referring to FIG. 34, in a case of cleaning a room, the robot cleaner 1 may output a noise canceling sound NS toward the door D1 of the room.

In various embodiments of the disclosure, the controller 200 may identify the door D1 based on information collected from the sensor module 100 and control the speaker 80 to output the noise canceling sound NS toward the door D1.

As the noise generated from the robot cleaner 1 is constant, it may be efficiently masked by the noise canceling sound.

According to an embodiment of the disclosure, in a case of doing the cleaning with the door closed, the noise canceling sound is output toward the door, thereby almost completely blocking the noise leaking out of the room.

According to an embodiment of the disclosure, the noise delivered to the user due to operation of the robot cleaner may be minimized.

According to an embodiment of the disclosure, a user convenience may be facilitated by minimizing the noise felt by the user.

The effects according to the disclosure are not limited thereto, and throughout the specification it will be clearly appreciated by those of ordinary skill in the art that there may be other effects unmentioned.

According to an embodiment of the disclosure, a robot cleaner includes a driving device, a cleaning device and a controller, wherein the controller controls the driving device to move the robot cleaner into a cleaning area, performs control to open or close a door of the cleaning area based on whether an entity is detected in the cleaning area, and controls the driving device and the cleaning device to perform cleaning of the cleaning area.

The controller may perform control to close the door based on the entity being not detected in the cleaning area.

The controller may set a cleaning sequence of the cleaning area to a later sequence based on the entity being detected in the cleaning area, and control the driving device to move the robot cleaner out of the cleaning area.

The controller may perform control to close the door based on the robot cleaner moving out of the cleaning area.

The controller may turn off the cleaning device or reduce suction force of the cleaning device based on the entity being detected in the cleaning area.

The controller may control a user interface to output sensory information for inquiring whether to allow cleaning of the cleaning area based on the entity being detected in the cleaning area.

The controller may control the driving device to move the robot cleaner out of a moving range of the door based on performing of control to close the door.

The controller may operate the cleaning device or increase suction force of the cleaning device based on the door being closed.

The controller may perform control to open or close the door by controlling the communicator to transmit a door opening command or door closing command to the door opening/closing device.

The controller may perform control to open or close the door by controlling the communicator to transmit a door opening command or door closing command to the door opening/closing device through an external device.

The controller may perform control to close the door by controlling the driving device to move the robot cleaner into a predetermined detection area in order to operate the door opening/closing device which opens or closes the door in response to an object being detected in the predetermined detection area.

The controller may perform control to close the door by controlling a speaker to output a predetermined voice command in order to operate the door opening/closing device which opens or closes the door in response to the predetermined voice command being received.

The controller may perform control to close the door by controlling a robot arm.

The controller may perform control to close the door by controlling the robot arm to press a button in order to operate the door opening/closing device which opens or closes the door in response to the button being pressed.

The controller may create a cleaning map based on data obtained from the at least one sensor while traveling a cleaning space, and the cleaning map may include information about at least one cleaning area separable from another cleaning area by at least one door and information about at least one door to separate the at least one cleaning area.

The controller may perform control to open a window of the cleaning area based on no entity being detected in the cleaning area.

The controller 200 may perform control to close the window based on cleaning of the cleaning area being completed.

The controller 200 may perform control to open the door based on cleaning of the cleaning area being completed.

The controller may control the driving device to move the robot cleaner into a common room including a first door of a first cleaning area and a second door of a second cleaning area, and perform control to close the first door based on the entity being detected in the first cleaning area.

The cleaning area may include a first cleaning area and a second cleaning area, and the controller may control the driving device to move the robot cleaner into the second cleaning area next to the first cleaning area in sequence based on the entity being detected in the first cleaning area and perform control to close a door of the second cleaning area based on the entity being not detected in the second cleaning area.

The controller may control suction force of the cleaning device to be first suction force to perform cleaning in the second cleaning area after detecting the entity in the first cleaning area, and control suction force of the cleaning device to be second suction force to perform cleaning in the second cleaning area after completion of cleaning of the first cleaning area in response to the entity being not detected in the first cleaning area, wherein the first suction force may be weaker than the second suction force.

According to an embodiment of the disclosure, a robot cleaner includes a driving device configured to move the robot cleaner; a cleaning device; a communicator; and a controller configured to receive location information of at least one entity on a cleaning map from an external device through the communicator, set cleaning sequences of a plurality of cleaning areas of the cleaning map based on the location information of the at least one entity, and control the driving device and the cleaning device to clean the plurality of cleaning areas based on the set cleaning sequences.

The controller may perform cleaning of the plurality of cleaning areas according to preset cleaning sequences, and set a cleaning sequence of a first room to a later sequence based on the entity being located in the first cleaning area among the plurality of cleaning areas.

The controller may perform control to close a door of a cleaning area based on the robot cleaner entering the cleaning area in which the entity is not located among the plurality of cleaning areas, and control the driving device and the cleaning device to perform cleaning of the cleaning area while the door is closed.

The controller may control the driving device to move the robot cleaner out of a moving range of the door before performing control to close the door.

The controller may operate the cleaning device or increase suction force of the cleaning device based on the door being closed.

The controller 200 may perform control to open the door based on cleaning of the cleaning area being completed.

The controller may perform control to open a window of a cleaning area based on the robot cleaner entering the cleaning area in which the entity is not located among the plurality of cleaning areas, and control the driving device and the cleaning device to perform cleaning of the cleaning area while the window is open.

The controller 200 may perform control to close the window based on cleaning of the cleaning area being completed.

The controller may control the user interface to output sensory information for inquiring whether to allow cleaning of a cleaning area based on the robot cleaner entering the cleaning area in which the entity is located among the plurality of cleaning areas.

The controller may perform cleaning of the cleaning area based on a positive response allowing cleaning of the cleaning area being received through the user interface.

The controller may set a cleaning sequence of the cleaning area to a last sequence based on a negative response disallowing cleaning of the cleaning area being received through the user interface.

The controller may skip cleaning of the cleaning area and complete cleaning with respect to the cleaning map based on a negative response disallowing cleaning of the cleaning area being received through the user interface.

The controller may control to close at least one door corresponding to at least one cleaning area in which the at least one entity is located, among a plurality of doors, to clean a common room including the plurality of doors corresponding to a plurality of cleaning areas.

The controller may perform control to close a plurality of doors to clean a common room including the plurality of doors corresponding to a plurality of cleaning areas.

The controller may control suction force of the cleaning device to be first suction force based on a distance between the robot cleaner and the at least one entity being a first distance, and control the suction force of the cleaning device to be second suction force based on the distance between the robot cleaner and the at least one entity being a second distance, wherein the first distance may be shorter than the second distance and the first suction force may be weaker than the second suction force.

The plurality of cleaning areas may include a first cleaning area corresponding to a first cleaning sequence, a second cleaning area corresponding to a second cleaning sequence later than the first cleaning sequence, and a third cleaning area corresponding to a third cleaning sequence later than the second cleaning sequence, and the controller may change a cleaning sequence of the third cleaning area to the first cleaning sequence, change a cleaning sequence of the first cleaning area to the second cleaning sequence, and change a cleaning sequence of the second cleaning area to the third cleaning sequence, based on the entities being located in the first cleaning area and the second cleaning area.

The controller may change a cleaning sequence of the second cleaning area to the first cleaning sequence, change a cleaning sequence of the third cleaning area to the second cleaning sequence, and change a cleaning sequence of the first cleaning area to the third cleaning sequence, based on the entity being located in the first cleaning area.

Several embodiments of the disclosure have been described above, but a person of ordinary skill in the art will understand and appreciate that various modifications can be made without departing from the scope of the disclosure. Thus, it will be apparent to those of ordinary skill in the art that the true scope of technical protection is only defined by the following claims.

Meanwhile, the embodiments of the disclosure may be implemented in the form of a recording medium for storing instructions to be carried out by a computer. The instructions may be stored in the form of program codes, and when executed by a processor, may generate program modules to perform operations in the embodiments of the disclosure. The recording media may correspond to computer-readable recording media.

The computer-readable recording medium includes any type of recording medium having data stored thereon that may be thereafter read by a computer. For example, it may be read only memory (ROM), random access memory (RAM), magnetic tape, magnetic disk, flash memory, optical data storage device, or the like.

The computer-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a recording medium (e.g., compact disc read only memory (CD-ROM)), through an application store (e.g., play store^{™}), directly between two user devices (e.g., smart phones), or online (e.g., downloaded or uploaded). In the case of online distribution, at least part of the computer program product (e.g., a downloadable app) may be at least temporarily stored or arbitrarily created in a recording medium that may be readable to a device, such as a server of the manufacturer, a server of the application store, or a relay server.

The embodiments of the disclosure have thus far been described with reference to accompanying drawings. It will be obvious to those of ordinary skill in the art that the disclosure may be practiced in other forms than the embodiments of the disclosure as described above without changing the technical idea or essential features of the disclosure. The above embodiments of the disclosure are only by way of example, and should not be construed in a limited sense.

## Claims

1. A robot cleaner comprising a driving device, a cleaning device and a controller,
wherein the controller is configured to control the driving device to move the robot cleaner into a cleaning area, perform control to open or close a door of the cleaning area based on whether an entity is detected in the cleaning area, and control the driving device and the cleaning device to perform cleaning of the cleaning area.

2. The robot cleaner of claim 1, wherein the controller is configured to perform control to close the door based on the entity being not detected in the cleaning area.

3. The robot cleaner of claim 1, wherein the controller is configured to set a cleaning sequence of the cleaning area to a later sequence based on the entity being detected in the cleaning area, and control the driving device to move the robot cleaner out of the cleaning area.

4. The robot cleaner of claim 3, wherein the controller is configured to perform control to close the door based on the robot cleaner moving out of the cleaning area.

5. The robot cleaner of claim 1, wherein the controller is configured to turn off the cleaning device or reduce suction force of the cleaning device based on the entity being detected in the cleaning area.

6. The robot cleaner of claim 1, further comprising: a user interface,
wherein the controller is configured to control the user interface to output sensory information for inquiring whether to allow cleaning of the cleaning area based on the entity being detected in the cleaning area.

7. The robot cleaner of claim 1, wherein the controller is configured to control the driving device to move the robot cleaner out of a moving range of the door based on performing of control to close the door.

8. The robot cleaner of claim 2, wherein the controller is configured to operate the cleaning device or increase suction force of the cleaning device based on the door being closed.

9. The robot cleaner of claim 1, further comprising: a communicator configured to communicate with a door opening/closing device which opens or closes the door,
wherein the controller is configured to perform control to open or close the door by controlling the communicator to transmit a door opening command or door closing command to the door opening/closing device.

10. The robot cleaner of claim 1, further comprising: a communicator configured to communicate with an external device communicating with a door opening/closing device which opens or closes the door,
wherein the controller is configured to perform control to open or close the door by controlling the communicator to transmit a door opening command or door closing command to the door opening/closing device through the external device.

11. The robot cleaner of claim 1, wherein the controller is configured to perform control to close the door by controlling the driving device to move the robot cleaner into a predetermined detection area in order to operate a door opening/closing device which opens or closes the door in response to an object being detected in the predetermined detection area.

12. The robot cleaner of claim 1, further comprising: a speaker,
wherein the controller is configured to perform control to close the door by controlling the speaker to output a predetermined voice command in order to operate a door opening/closing device which opens or closes the door in response to the predetermined voice command being received.

13. The robot cleaner of claim 1, further comprising: a robot arm,
wherein the controller is configured to perform control to close the door by controlling the robot arm.

14. The robot cleaner of claim 1, further comprising: at least one sensor,
wherein the controller is configured to create a cleaning map based on data obtained from the at least one sensor while traveling in a cleaning space, and
wherein the cleaning map comprises information about at least one cleaning area, each of which is separable from another cleaning area by at least one door, and information about at least one door for separating the at least one cleaning area.

15. The robot cleaner of claim 1, wherein the controller is configured to perform control to open a window of the cleaning area based on no entity being detected in the cleaning area.
